(19) Europäisches Patentamt
European Patent Office
Office européen des brevets

(11) **EP 2 677 457 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(51) Int Cl.:
*G06K 7/00* (2006.01)  *G06Q 10/08* (2012.01)
*G07B 15/02* (2011.01)  *G06Q 10/02* (2012.01)

(21) Anmeldenummer: **12173223.4**

(22) Anmeldetag: **22.06.2012**

(54) **Verfahren und System zur Lokalisierung eines e-Tickets in einem Verkehrsmittel**

Method and system for localising an e-ticket in a transportation vehicle

Procédé et système de localisation d'un billet électronique dans un moyen de transport

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.12.2013 Patentblatt 2013/52**

(73) Patentinhaber:
• **Siemens Schweiz AG**
  **8047 Zürich (CH)**
• **Siemens Aktiengesellschaft**
  **80333 München (DE)**

(72) Erfinder:
• **Kalbermatter, Marcel**
  **3940 Steg (CH)**

• **Eberhardt, Uwe**
  **81539 München (DE)**
• **Glänzer, Martin**
  **81827 München (DE)**
• **Roskosch, Richard**
  **85521 Ottobrunn (DE)**

(74) Vertreter: **Maier, Daniel Oliver**
  **Siemens AG**
  **Postfach 22 16 34**
  **80506 München (DE)**

(56) Entgegenhaltungen:
**EP-A1- 1 210 693       DE-A1-102005 048 080**
**DE-A1-102009 001 366   GB-A- 2 355 876**
**US-A1- 2008 100 450**

**Beschreibung**

Die vorliegende Erfindung bezieht sich auf ein Verfahren und ein System zur Lokalisierung eines e-Tickets in einem Verkehrsmittel gemäss dem Patentanspruch 1 bzw. Patentanspruch 14.

Die generelle Funktionalität und die Anforderungen an ein e-Ticketing-System in einem Fahrzeug des öffentlichen Verkehrs kann beispielsweise den in [5] und [6] angegebenen Quellen entnommen werden. Elektronische Billette bzw. elektronische Fahrscheine sind auch unter dem Begriff e-Tickets bekannt. Im Folgenden werden die vorgenannten zwei Begriffe kurz unter e-Ticket subsumiert. Ebenso werden Fahrzeuge des OeV - wie auch Kursschiffe - unter dem Begriff (öffentliches) Verkehrsmittel subsumiert.

Es werden im wesentlichen zwei verschiedene Ticketing-Systeme unterschieden:

CiCo Check-in/Check-Out

Ein Fahrgast hält bewusst beim Betreten und beim Verlassen des Verkehrsmittels bzw. des Bahnsteig-Bereichs sein Billett kurz vor eines der zum Abrechnungssystem gehörenden Lesegeräte, korrekterweise «Sende-/Empfangseinheiten». Die Abfrage des Billetts - im folgenden stets e-Ticket genannt - erfolgt durch eine Nahdistanz-Funkverbindung, wie z.B.

- Proximity, ISO/IEC 14443,
  Reichweite bis 10cm;
- Vicinity, ISO/IEC 15693, 13.56MHz;
  Reichweite 1 - 1.5m.

BiBo Be-in/Be Out

Bei komfortableren Systemen ist es nur noch nötig, dass der Fahrgast sein elektronisches Billett auf sich trägt:

Das Billett wird per Funk innerhalb der befahrenen Streckenabschnitte automatisch von den in den Wagen installierten Leseeinheiten erfasst und die so gewonnenen Daten einem automatischen Abrechnungssystem zugeführt. Eine Interaktion des Benutzers ist nicht mehr notwendig. Es braucht auch keinen Check-Out-Vorgang. Somit lässt sich der Fahrgastfluss erheblich beschleunigen, insbesondere beim gleichzeitigen Ein-/Aussteigen der Passagiere.

Aus der Schrift EP 1 210 693 B1 [1] ist ein Verfahren und ein System zur Erfassung von elektronischen Billette (e-Ticket) bekannt. Dem in der Schrift [1] offenbarten System liegt folgende Funktionalität zugrunde:

Aus Gründen der Autonomie befinden sich die Billette in einem Schlafzustand. Beim Eintritt in ein Verkehrsmittel werden die E-Tickets durch ein Nahfeld, z.B. 6.78Mhz geweckt und unidirektional mit einer ID sowie einer Timing Information «gestempelt». Die ID bezieht sich auf den im Eingangsbereich befindlichen Wecksender und die Timing Information auf Beginn und Intervall einer bidirektionalen Kommunikation zwischen e-Ticket und einer im Wagen befindlichen Sende- und Empfangseinheit. Durch das Protokoll können bei diesem System Fehlerfassung verhindert werden, so z.B.

- Parallelfahrt auf einem Fahrrad oder durch Parallelfahrt zweier Züge
- Betrugsversuche durch temporäres Versorgen des E-Tickets in eine metallene Zigarettenschachtel.

Das in EP 1 210 693 B1 [1] offenbarte System erlaubte die Detektion des Aufenthaltes beim Durchwandern eines Zuges mit der Granularität Wagen bzw. der Granularität Sende-/Empfangsbereich der in einem Wagen angeordneten Sende-/Empfangseinheit. Überlappungen sind dabei ausdrücklich möglich und erwünscht. Diese Überlappungen haben jedoch die Konsequenz, dass eine Zuordnung des Ortes eines E-Tickets zu einem bestimmten Ort innerhalb eines Verkehrsmittels nicht möglich ist.

Der vorliegenden Erfindung liegt daher die Aufgabe zugrunde, ein Verfahren und System zur Lokalisierung eines e-Tickets in einem Verkehrsmittel anzugeben, das eine genaue Lokalisierung des Ortes des E-Tickets im Verkehrsmittel erlaubt, um dadurch eine "aufenthaltssentive" Erfassung zu ermöglichen, beispielsweise eine Zuordnung 1. Klasse/2. Klasse für einen Wagen, der beide Klassen enthält, sei es 1. Klasse und 2. Klasse oder Restaurant und 2. Klasse wie dies z.B. bei den Schweizerischen Verkehrsunternehmungen wie RhB, ZVV, SGV oder SBB üblicherweise vorkommt. Im Sinne dieser Schrift wird die Lokalisierug des Ortes des E-Tickets in einem Verkehrsmittel als relativer Ort bezeichnet, relativ in Bezug auf die Lage innerhalb des betrachteten Verkehrsmittels.

Diese Aufgabe wird durch die in den unabhängigen Patentansprüchen angegebenen Massnahmen gelöst.

Vorteilhafte Ausgestaltungen der Erfindung sind in weiteren Ansprüchen angegeben.

So können sich die folgenden Vorteile zusätzlich ergeben:

i) Die Erfindung ist unabhängig von der gewählten Datenkommunikation zwischen e-Ticket und der wenigstens einen in einem Verkehrsmittel angeordneten Sende-/Empfangseinheit. Insbesondere braucht das e-Ticket nicht für eine Datenkommunikation «geweckt» zu werden. Deshalb ist auch eine Ortung wichtig, bei der lediglich feststellbar ist, ob sich das e-Ticket innerhalb oder ausserhalb eines tarifpflichtigen Verkehrsmittels befindet. Ebenso setzt die Erfindung bezüglich der Ortung keine bidirektionale Datenverbindung voraus, es genügt, eine Radioverbindung vom e-Ticket zur im Verkehrsmittel angeordneten Sende-/Empfangseinheit.

ii) Die Erfindung ermöglicht eine spezifische Abrechnung in Bezug auf die Position und Aufenthaltsdauer innerhalb des Verkehrsmittels. Voraussetzung dazu ist lediglich, dass die erfassten Aufenthaltsdaten periodisch an eine ausserhalb des Verkehrsmittels befindliche Abrechnungs- oder Kontrollstelle des Betreibers übermittelt werden.

iii) Eine Auswertung der mit der Erfindung erfassten Warnung an den Fahrer / Zugführer, wenn das Abrechnungssystem eine Überfüllung des Verkehrsmittels erkennt; könnte beim vorgestellten System auch in Bezug auf einen einzelnen Fahrzeugteil erfolgen.

iv) Lieferung von detaillierten Informationen (anonymisiert) an den Betreiber, wie stark welcher Bereich des Verkehrsmittels ausgelastet war und mit welchem zeitlichen Verlauf (-> Kann dann dementsprechend bei künftigen Investitionen dem Verhalten seiner Fahrgäste auf den jeweiligen Strecken leichter Rechnung tragen und unnötige Investitionen vermeiden).

v) Hinterlegung von Daten in einem übergeordneten System, das nach Unglücken schnell Informationen liefern kann, in welchem Bereich des Wagens sich wie viele Fahrgäste befunden haben (Informationen für Rettungskräfte).

Die Erfindung wird nachfolgend anhand der Zeichnung beispielsweise näher erläutert. Dabei zeigen:

Figur 1 Längsdarstellung der Anordnung von zwei Sende-/Empfangseinheiten in einem Eisenbahnwagen für die Lokalisierung eines E-Tickets über eine Winkelmessung;

Figur 2 Querschnittdarstellung der Anordnung von zwei Sende-/Empfangseinheiten in einem Eisenbahnwagen für die Lokalisierung eines E-Tickets über eine Winkelbestimmung;

Figur 3 Querschnittdarstellung der Anordnung von Sende-/Empfangseinheiten in einem Eisenbahnwagen für die Lokalisierung eines E-Tickets über eine Abstandsbestimmung;

Figur 4 Sende-/Empfangseinheit mit gerichteten Antennen für die Lokalisierung eines e-Tickets über eine Winkelbestimmung;

Figur 5 Schaltungsanordnung zur Winkelbestimmung über eine Phasenauswertung;

Figur 6 Anordnung einer Sende-/Empfangseinheit an der Grenze von zwei Klassen für die Lokalisierung mit Winkelbestimmung;

Figur 7 Anordnung einer Sende-/Empfangseinheit in einem Doppelstockwagen für die Lokalisierung mit Winkelbestimmung;

Figur 8 Schaltungsanordnung zur Abstandsmessung mit einem Backscatter-Transponder;

Figur 9 Spektrendarstellung für eine Abstandsmessung mit Backscatter;

Figur 10 Längsdarstellung der Anordnung einer einzigen Sende-/Empfangseinheiten in einem Eisenbahnwagen für die Lokalisierung eines E-Tickets über eine Abstandsbestimmung;

Figur 11 Längsdarstellung der Anordnung von zwei Sende-/Empfangseinheiten an den Wagen-Enden mit einem Hilfstransponder für die Lokalisierung eines E-Tickets über eine Abstandsmessung;

Figur 12 Blockschaltbild eines e-Tickets für die Abstandsmessung gemäss dem definierten Verfahren;

Figur 13 Blockschaltbild einer Sende-/Empfangseinheit für die Abstandsmessung gemäss dem im Dokument [7] definierten Verfahren;

Figur 14 Blockschaltbild einer Sende-/Empfangseinheit für die Abstandsmessung gemäss dem im Dokument [7] definierten Verfahren mit direkter Abtastung des Funksignals;

Figur 15 Signalspektrum unter schwierigen Bedingungen;

Figur 16 Beispiel für den Informationsfluss bei einem neuronalen Netz zur Auswertung verschiedenster Informationen zur Winkelbestimmung mittels einer Schätzung.

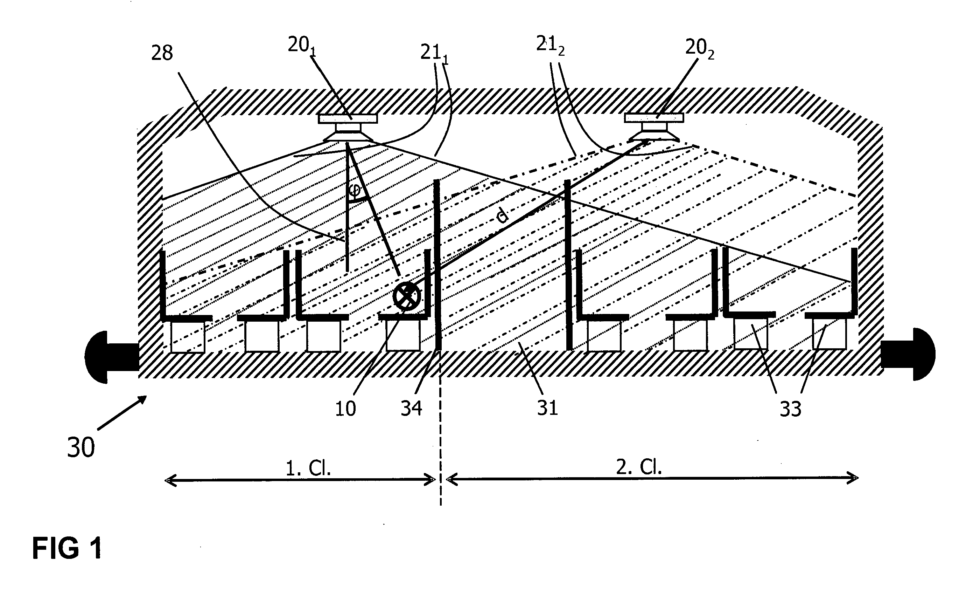

Figur 1 zeigt einen Eisenbahnwagen 30 als Beispiel eines Verkehrsmittels 30. Der Eisenbahnwagen 30 in zwei Abteile 1. Cl. (1. klasse, links) und 2. Cl. (2. klasse, rechts) gegliedert, siehe dazu die Trennwand 34 im Eingangsbereich 31. An der Decke des Eisenbahnwagens 30 sind zwei Sende-/Empfangseinheiten $20_1$ und $20_2$ installiert. Die Erfassungsbereiche $21_1$ und $21_2$ (=Antennenöffnungswinkel) der Sende-/Empfangseinheiten sind so großzügig bemessen, dass für die meisten möglichen Positionen eines e-Tickets 10 im Eisenbahnwagen 30 eine Kommunikation mit beiden Sende-/Empfangseinheiten $20_1$ und $20_2$ möglich ist; dies ist wichtig wegen Redundanz. Im Bereich der 1. Cl. befinde sich eine Person mit einem E-Ticket 10. Nun muss eindeutig festgestellt werden können, ob sich diese Person im Bereich der 1. Cl befindet oder nicht. Das E-Ticket 10 befindet sich im Erfassungsbereich $21_1$ und $21_2$ beider Sende-/Empfangseinheiten $20_1$ und $20_2$. Auch über die Empfangspegel kann unter Umständen keine eindeutige Abgrenzung zwischen 1. und 2. Cl. vorgenommen werden, da hier die Messgenauigkeit oftmals unzureichend ist, z. B. durch im Eingangsbereich stehende Personen. Findet nun eine Kommunikation zwischen e-Ticket 10 und Sende-/Empfangseinheit $20_1$ statt, so kann im Verlauf dieser Kommunikation oder im Rahmen eines eigenen Messvorganges zwischen Sende-/Empfangseinheiten $20_1$ und dem E-Ticket 10 von der Sende-/Empfangseinheit $20_1$ aus gesehen der Winkel zwischen dem E-Ticket 10 und einer Bezugsrichtung 28, hier der Senkrechten 28, ermittelt werden. Wird anschließend der gleiche Kommunikations- und Messvorgang zwischen Sende-/Empfangseinheit $20_2$ und dem e-Ticket 10 durchgeführt, so lässt sich über geometrische Beziehungen - die Positionen der beiden Sende-/Empfangseinheiten $20_1$ und $20_2$ im Eisenbahnwagen 30 sind bekannt - ziemlich genau die Position des E-Ticket 10 im Eisenbahnwagen 30 ermitteln. Gemäss der Figur 1 findet eine Messung des Winkeln in einer Ebene statt, die mittig entlang der Längsachse des Zuges verläuft. Natürlich kann eine Winkelmessung auch in zwei oder mehreren Ebenen stattfinden, um praktischen Erfordernissen Rechnung zu tragen.

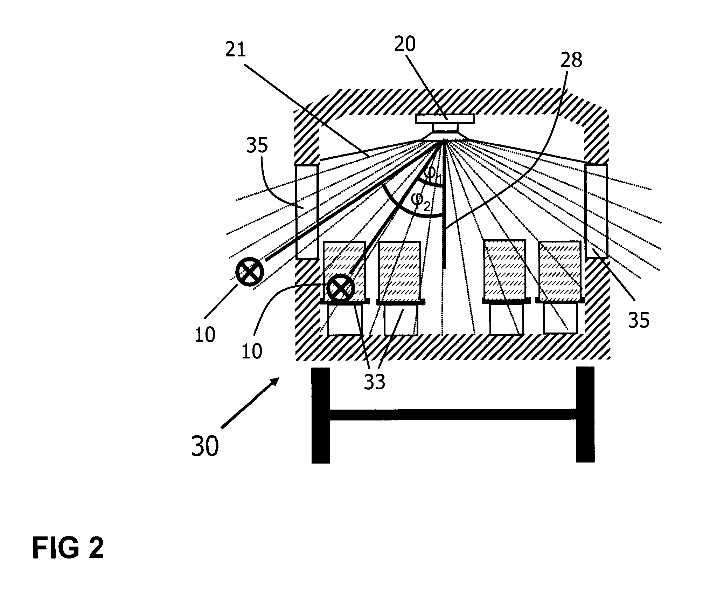

Figur 2 zeigt eine Querschnittsansicht eines Eisenbahnwagens 30 zur Erläuterung einer Ausführungsform der vorliegenden Erfindung für eine Winkelmessung in einer Bezugsebene 38, die senkrecht zur Längsachse eines Eisenbahnwagens liegt. Hier dient die Messung der Winkel $\varphi1$, $\varphi2$ einer exakten Unterscheidung, ob sich ein e-Ticket 10 innerhalb oder außerhalb des Verkehrsmittels 30 befindet. Wie in der Figur 2 angedeutet, kann die Sende-/Empfangseinheit 20 z. B. durch die Fenster 35 hindurch per Funk auch mit e-Tickets 10 kommunizieren, die sich außerhalb des Verkehrsmittels 30 befinden. Steht nun der Eisenbahnwagen an einem Perron, oder durchfährt ein Zug langsam an einem Perron vorbei (weil die betreffende Station für diesen Zug keine Haltestelle darstellt), so kann durch die abgebildete Sende-/Empfangseinheit 20 an der Decke des Eisenbahnwagens 30 auch ein e-Ticket 10 einer Person auf dem Perron erfasst werden. Die dafür notwendige Kommunikation zwischen Sende-/Empfangseinheit 20 und e-Tickets 10 könnte z. B. durch die Fenster 35 des Eisenbahnwagens 30 hindurch erfolgen. In so einem Fall darf keine Fahrpreisbuchung bei der Person am Perron erfolgen. Ein Passagier, der sich hingegen innerhalb des Zuges aufhält und das e-Ticket 10 bei sich trägt, sollte hingegen zuverlässig erkannt werden. Wie abgebildet lässt sich über eine Winkelmessung - siehe dazu die Winkel $\varphi1$, $\varphi2$ in der Figur 2 - in der beschriebenen Ebene entweder klar unterscheiden, ob sich der Passagier innerhalb oder außerhalb des Eisenbahnwagens 30 befindet oder es kann durch die Winkelmessung zumindest ein weiterer Beitrag zu einer sicheren Positionsbestimmung geliefert werden. Grundsätzlich erscheinen zur Winkelmessung alle aus dem Bereich der Radarsystemtechnik bekannten Verfahren geeignet. Hier können z. B. Laufzeitunterschiede und Phasenunterschiede beim Empfang eines von einem e-Ticket 10 ausgesendeten Signals mit mehreren Antennen einer Sende-/Empfangseinheit 20 ausgewertet werden. Oder es werden mehrere Sende-/Empfangseinheiten 20 mit stark bündelnden und in unterschiedliche Richtungen orientierten Antennen verwendet, wobei über die Sende-/Empfangseinheiten 20 mit dem stärksten Empfangspegel auf den Winkeln $\varphi$ zum e-Ticket 10 geschlossen werden kann.

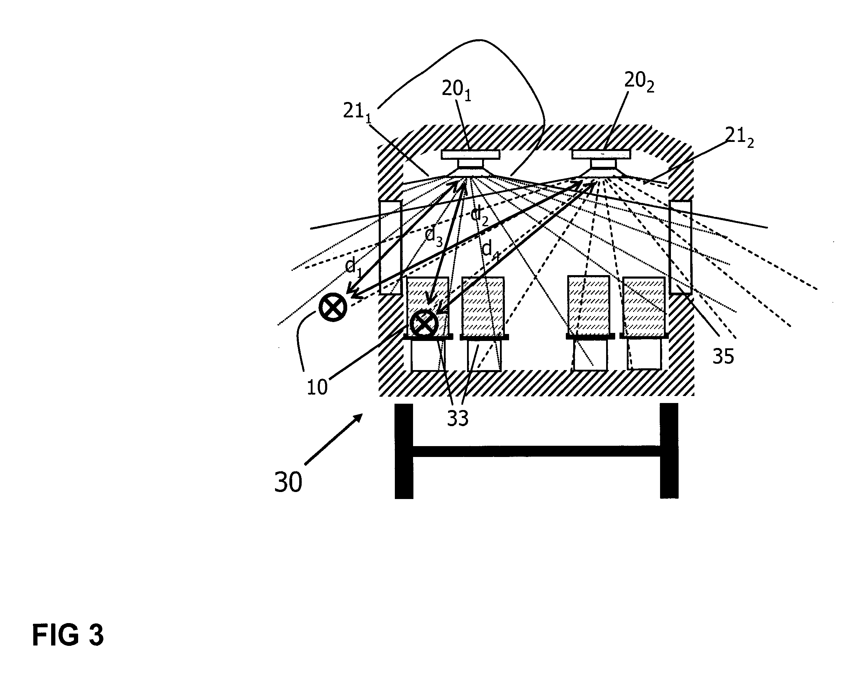

Die Ortung eines e-Tickets 10 in einem Verkehrsmittel kann auch über eine Messung der Distanz d zwischen e-Ticket 10 und einer oder mehrerer Sende-/Empfangseinheiten 20 vorgenommen werden. Dies wird beispielhaft anhand der Figur 3 erläutert. Es wird angenommen, dass ein Passagier auf einem Sitz 33 sich aufhält und er sein e-Ticket 10 in der Hosentasche hat. Hier dient die Abstandsmessung zur exakten Unterscheidung, ob sich ein e-Ticket 10 innerhalb oder außerhalb des Verkehrsmittels 30 befindet. Wie in der Figur 3 angedeutet, können die Sende-/Empfangseinheiten

$20_1$ und $20_2$ z. B. durch die Fenster 35 hindurch per Funk auch mit e-Tickets 10 kommunizieren, die sich außerhalb des Verkehrsmittel 30 befinden. Steht nun der Zug an einem Perron, oder fährt der Zug langsam an einem Perron vorbei weil die betreffende Station für diesen Zug keine Haltestelle darstellt, so kann durch die an der Decke installierten Sende-/Empfangseinheiten $20_1$ und $20_2$ auch das e-Ticket 10 einer Person auf dem Perron erfasst werden. Die dafür notwendige Kommunikation zwischen Sende-/Empfangseinheiten $20_1$ und $20_2$ und dem e-Ticket könnte z. B. durch die Fenster 35 des Eisenbahnwagens hindurch erfolgen. In so einem Fall darf keine Fahrpreisbuchung bei der Person am Perron erfolgen. Ein Passagier, der sich hingegen innerhalb des Eisenbahnwagens 30 aufhält und das e-Ticket 10 bei sich trägt, sollte zuverlässig erkannt werden. Wie in der Figur 3 gezeigt, lässt sich über die Messung der Abstände $d_1$, $d_2$, $d_3$, $d_4$ zwischen den beiden Sende-/Empfangseinheiten $20_1$ und $20_2$ und dem betreffenden e-Ticket und einer Positionsbestimmung über geometrische Beziehungen entweder klar unterscheiden, ob sich der Nutzer innerhalb oder außerhalb des Eisenbahnwagens befindet oder es kann durch die Abstandsmessungen zumindest ein weiterer Beitrag zu einer sicheren Positionsbestimmung eines E-Tickets 10 geliefert werden. Bei der in Figur 3 gezeigten Anordnung erfolgt die Positionsbestimmung in bezüglich zweier Dimensionen. Durch die Verwendung einer dritten Sende-/Empfangseinheit 20 könnte auch eine exakte Positionsbestimmung im Raum durchgeführt werden. Grundsätzlich erscheinen zur Abstandsmessung alle aus dem Bereich der Radarsystemtechnik bekannten Verfahren geeignet. Hier können z. B. Laufzeitunterschiede und Phasenunterschiede beim Empfang eines von einem e-Ticket 10 ausgesendeten Signals mit ausgesendeten Signals mit mehreren Antennen einer Sende-/Empfangseinheit 20 ausgewertet werden. Die Abstandsmessung ist auch längs eines Eisenbahnwagens 30 eine valable Bestimmung des exakten Ortes eines e-Tickets 10, dazu wird auf Figur 1 verwiesen wo die Distanz zwischen dem e-Ticket 10 und der Sende-/Empfangseinheit $20_2$ mit der Distanz d angegeben ist.

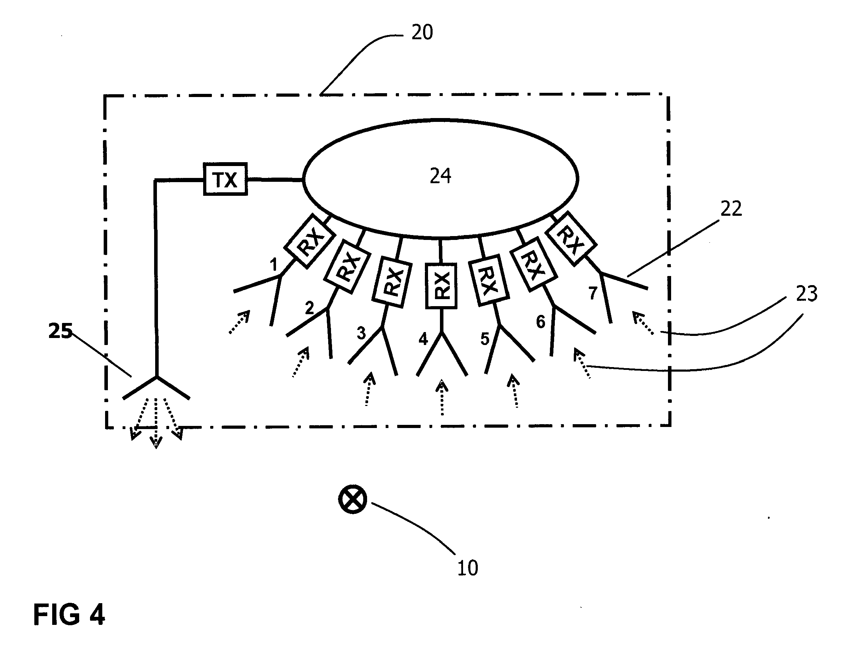

Figur 4 zeigt die schaltungsmässige und funktionale Struktur einer Sende-/Empfangseinheit 20 mit gerichteten Antennen für die Lokalisierung eines e-Tickets 10 über eine Messung des Winkel φ. Dazu enthält die Sende-/Empfangseinheit 20 mehrere gerichtete Empfangsantennen 22, deren Hauptachsen in unterschiedliche Richtungen zeigen (dargestellt entsprechend einer möglichen räumlichen Anordnung). Die einzelnen Antennen 22 sind jeweils an einen eigenen Empfänger RX angeschlossen. Die Empfänger RX liefern unter anderem auch einen Wert für den Empfangspegel, wenn eine Datenkommunikation stattfindet. Befindet sich das e-Ticket 10 z. B. an der dargestellten Position und wird vom e-Ticket 10 nun ein Datenpaket an die Sende-/Empfangseinheit 20 gesendet, so wird dieses Datenpaket (sofern sich keine Objekte im Bereich zwischen e-Ticket 10 und Sende-/Empfangseinheit 20 befinden) über die Antenne 3 mit dem stärksten Pegel empfangen, da hier die Richtung zum e-Ticket 10 hin mit der Ausrichtung der Antenne am besten übereinstimmt. Somit kann der Winkeln φ zum e-Ticket 10 in gewissen Schritten bzw. mit einer gewissen Granularität bestimmt werden, beispielsweise durch eine Interpolation. Über den Vergleich mit Empfangpegeln mehrerer Antennen / Empfänger RX können auch Positionen zwischen den Hauptachsen der Antennen ermittelt werden. Für das Versenden von Datenpaketen von der Sende-/Empfangseinheit 20 an die e-Tickets 10 wird der abgebildete Sendebaustein verwendet. Dessen Signal wird über eine eigene Sendeantenne 25 abgestrahlt, die einen großen Öffnungswinkel aufweist und somit den gesamten Erfassungsbereich 21 der Sende-/Empfangseinheit 20 abdeckt. So können mit einem einzigen gesendeten Datenpaket mehrere e-Tickets 10 gleichzeitig angesprochen werden (zeitliche Straffung des Protokollablaufs). Idealerweise sollte das e-Ticket 10 für eine solche Funktionalität mit einer omnidirektionalen Antenne ausgerüstet sein, d. h. die Antenne im e-Ticket 10 sollte keine Vorzugsrichtung aufweisen. Von Vorteil wirkt sich hier aus, dass am Markt kompakte und leistungsfähige Sende-/Empfangsbausteine zu niedrigen Preisen erhältlich sind, so dass sich die einzelnen Empfänger preiswert und mit niedriger Leistungsaufnahme realisieren lassen, dazu wird auf die Quellen [9], [10] sowie auf die Quellen [3] [4] verwiesen. Ebenso vorteilhaft ist, dass auf der Seite der e-Tickets 10 kein zusätzlicher Schaltungsaufwand erforderlich ist. Alleine die ohnehin erforderliche Übertragung von Datenpaketen kann auch zur Gewinnung einer Information über den Winkeln φ herangezogen werden. Einige moderne Bausteine zur Funkdatenkommunikation erlauben den direkten Anschluss von mehreren Antennen, so dass sich die dargestellte Lösungsvariante unter Umständen auch mit einem einzigen Baustein zur Funkdatenkommunikation realisieren lässt. Nachteile eines solchen Ansatzes sind die erforderliche Anzahl an Antennen, die zudem vergleichsweise groß ausfallen müssen, um einen gewissen Antennengewinn zu erzielen. Außerdem kann es abhängig vom Umfeld und der Anwesenheit von Objekten um e-Ticket 10 und Lese-/Empfangseinheit 20 herum zu einer fehlerbehafteten Bestimmung des Winkels φ kommen, da sich unter Umständen auf einem Umweg eine günstigere Funkverbindung zwischen e-Ticket 10 und Lese-/Empfangseinheit 20 ergibt. Bei einigen am Markt verfügbaren Sende-/Empfangsbausteinen erfolgt die Angabe einer Pegelinformation nur mit einer geringen Genauigkeit, was sich auch auf die Genauigkeit der Winkelmessung auswirkt.

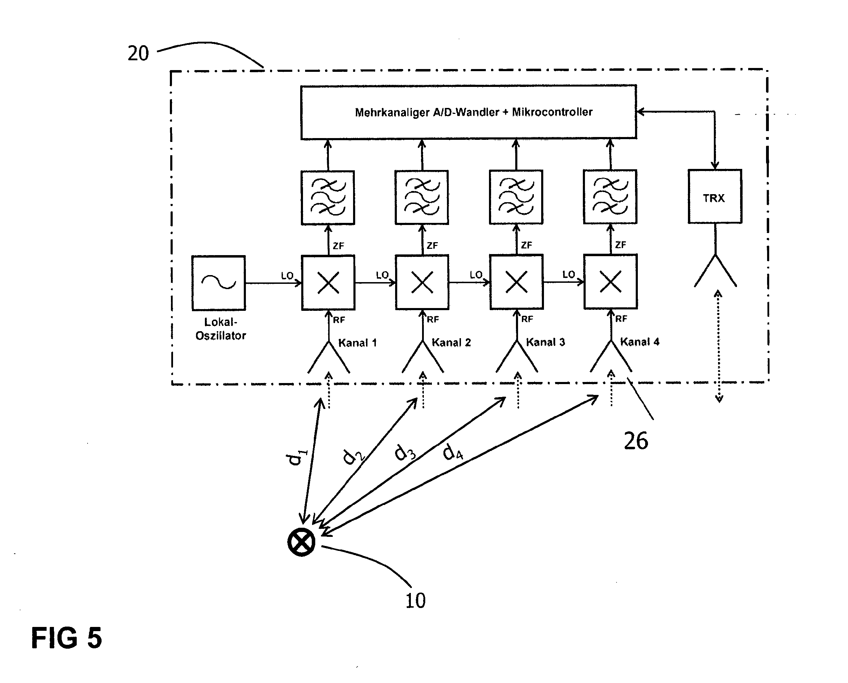

Eine weitere Ausführungsform einer Sende-/Empfangseinheit 20 zeigt Figur 5. Hier sind die Funktionseinheiten zur Datenkommunikation und zur Messung des Winkels φ voneinander getrennt. Die Datenkommunikation 41 findet über die in der Figur 5 rechts dargestellten Funktionsblöcke Transceiver-Baustein TRX und die zugehörige Antenne statt. Die Messung des Winkels φ erfolgt mit Hilfe von vier Empfangszweigen. Dies ist in der Figur 5 mit "Kanal 1" bis "Kanal 4" bezeichnet, wobei die einzelnen Antennen räumlich nebeneinander angeordnet sind. Befindet sich das System entsprechend dem Protokollablauf in der Phase der Winkelbestimmung, so sendet das e-Ticket ein Dauerstrich-Funksignal in Form einer Frequenzrampe aus. Diese Frequenzrampe wird über die vier Kanäle empfangen und jeweils mit Hilfe eines Mischers, der von einem gemeinsamen LO-Signal gespeist wird, auf eine Zwischenfrequenzebene umgesetzt. Die so gewonnenen Zwischenfrequenzsignale werden über ein Bandpassfilter auf Eingänge von A/D-Wandlern geführt und von einem Mikrocontroller ausgewertet. Das gemeinsame LO-Signal durchläuft während der Messung, zeitlich passend zur vom e-Ticket 10 gesendeten Frequenzrampe, ebenfalls eine Frequenzrampe, wobei z. B. ein gewisser Frequenzunterschied zur Frequenzrampe des e-Tickets 10 eingehalten wird. Grundsätzlich ergibt sich für die vier Kanäle eine ähnliche Zwischenfrequenz, die abhängig vom Abstand d zwischen e-Ticket 10 und Sende-/Empfangseinheit 20 ist: Mit steigendem Abstand steigt auch die sich ergebende Zwischenfrequenz. Die einzelnen Empfangszweige werden kohärent zueinander betrieben, d. h. sie sind im Idealfall identisch aufgebaut und werden mit dem gleichen LO-Signal (selbe Phasenlage) gespeist. Wie in der Figur 5 überdeutlich dargestellt, weichen die Abstände d, $d_1$, $d_2$, $d_3$, $d_4$ zwischen dem e-Ticket 10 und den einzelnen Antennen entsprechend dem Winkel $\varphi$ des e-Tickets zur Sende-/Empfangseinheit 20 etwas voneinander ab. Über eine Spektralanalyse der einzelnen Zwischenfrequenzen und einen Vergleich der Phasenlagen der von den einzelnen Kanälen gelieferten Zwischenfrequenzsignale kann auf den Winkel $\varphi$ des e-Tickets zur Sende-/Empfangseinheit 20 geschlossen werden. Um das eben beschriebene Funktionsprinzip umzusetzen, würden zwei Empfangskanäle ausreichen. Verwendet man hingegen weitere Empfangskanäle (im dargelegten Beispiel 4), so lassen sich Genauigkeit und Zuverlässigkeit der Winkelmessung erhöhen. Das dargestellte Verfahren zur Ermittlung einer Winkelinformation ist eines der aus dem Bereich der Radarsystemtechnik bekannten Verfahren ("Stand der Technik"), die Verwendung zur Erkennung der Position eines e-Tickets 10 im Bereich E-Ticketing ist hingegen neu. Grundsätzlich können alle aus dem Bereich der Radarsystemtechnik bekannten Verfahren zur Winkelmessung herangezogen werden. Diese Verfahren basieren in der Regel auf einer direkten oder indirekten Messung von Laufzeiten eines Funksignals, auf dem Vergleich von Phasenverhältnissen von Funksignalen oder schlichtweg auf einer räumlichen Anordnung mehrerer gerichteter Antennen. Bei den eingesetzten Funksignalen kann es sich dabei um Dauerstrich-Signale CW, FMCW oder auch um pulsförmige Signale handeln. Auch kann eine Winkelmessungen auf Basis von ausgesendeten Radarsignalen mit nacheinander eingestellten Frequenzschritten erfolgen (Stepped-Frequency-Verfahren). Eine besonders vorteilhafte Lösung ergibt sich, wenn für die Umsetzung eines Verfahrens zur Winkelmessung nicht nur auf der Seite des e-Tickets 10, sondern auch auf der Seite der Sende-/Empfangseinheit 20 kein zusätzlicher Hardware-Aufwand erforderlich ist, sondern bereits bestehende Einrichtungen und Funktionen im System genutzt werden können. Das zum Zwecke einer Winkelmessung ausgesendete Radarsignal muss einer zeitlichen Veränderung, z. B. in der Frequenz oder in der Phasenlage, unterzogen werden. Auch das Versenden von Datenpaketen stellt so eine zeitliche Veränderung dar, so dass auch die ohnehin zwischen e-Ticket 10 und Sende-/Empfangseinheit 20 ausgetauschten Datenpakete zusätzlich auch im Hinblick einer Winkelmessung ausgewertet werden können. Mit Hilfe moderner, am Markt verfügbarer Funkkommunikationsbausteine lassen sich, z. B. durch Bereitstellung weiterer Informationen zu erhaltenen Datenpaketen, im Idealfall so neben der Übertragung der Datenpakete selbst auch Informationen zur Winkelbestimmung gewinnen. Auch liefern neuartige Funkkommunikationsbausteine, die in speziellen UWB-Frequenzbereichen mit geringen Sendeleistungspegeln arbeiten, neben der Übertragung von Datenpaketen häufig vergleichsweise präzise Zusatz-Informationen, wie z. B. einen automatisch ermittelten Wert für den Abstand d zum Kommunikationspartner. Dieser Abstandswert d basiert nicht mehr auf einer einfachen Auswertung von Empfangsleistungspegeln, sondern auf bekannten Verfahren zur Abstandsmessung aus dem Bereich der Radarsystemtechnik. Verschiedene kleinere Hersteller haben bereits die Markteinführung solcher UWB-Kommunikationsbausteine angekündigt, siehe z.B. die Schriften [3] und [4]. Um die Manipulation eines der beschriebenen Systeme zur Winkelmessung zu erschweren, lassen sich weitere Mechanismen im System einbinden, wie z. B. der Einsatz von mit Pseudo-Noise-Codes modulierten Funksignalen oder die Messung über wechselnde Frequenzrampen. Auch dafür geeignete Verfahren können als "Stand der Technik" bezeichnet werden. Neu ist jedoch auch hier der Einsatz zum Zwecke des Schutzes von Verfahren zur Winkelschätzung im Bereich E-Ticketing.

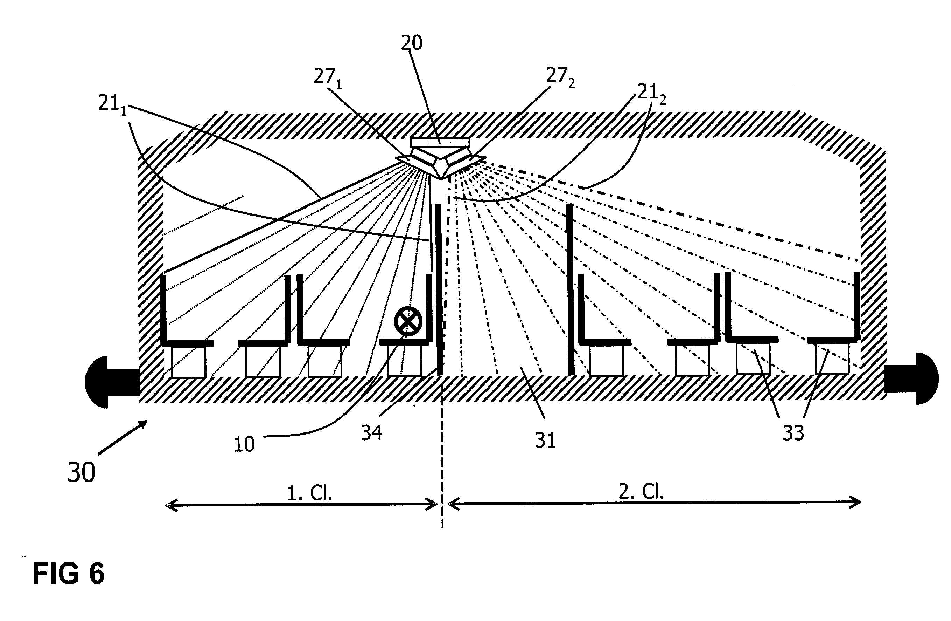

Figur 6 zeigt ein besonders interessantes Ausführungsbeispiel, bei dem sich mit vergleichsweise geringem Aufwand eine Unterscheidung zwischen den beiden Klassen in einem Eisenbahnwagen 30 vornehmen lässt. Eine installierte Sende-/Empfangseinheit 20 mit zwei Antennen befindet sich mittig über der Grenze zwischen 1. Cl. und 2. Cl. Hier erfolgt die Unterscheidung zwischen den beiden Klassen durch über die Antennenrichtcharakteristik festgelegte Erfassungsbereiche $21_1$ und $21_2$. Entweder kann nur über eine der beiden Antennen der Sende-/Empfangseinheit 20 eine Kommunikation mit dem e-Ticket 10 stattfinden, oder es ist zumindest über die jeweiligen Empfangspegel eine Zuordnung zu einer Klasse möglich. Zur Realisierung eines solchen Systems kann die Sende-/Empfangseinheit 20 mit zwei Kommunikationsbausteinen ausgerüstet sein, von denen jeder mit einer eigenen Antenne verbunden ist, oder aber mit einem Kommunikationsbaustein, an den zwei Antennen angeschlossen werden können. In der Figur 6 ist ein e-Ticket 10 eingezeichnet, das der 1. Cl. zuzuordnen wäre. Selbstverständlich kann auch die gerade vorgestellte Anordnung mit den oben beschriebenen, weiteren Verfahren kombiniert werden.

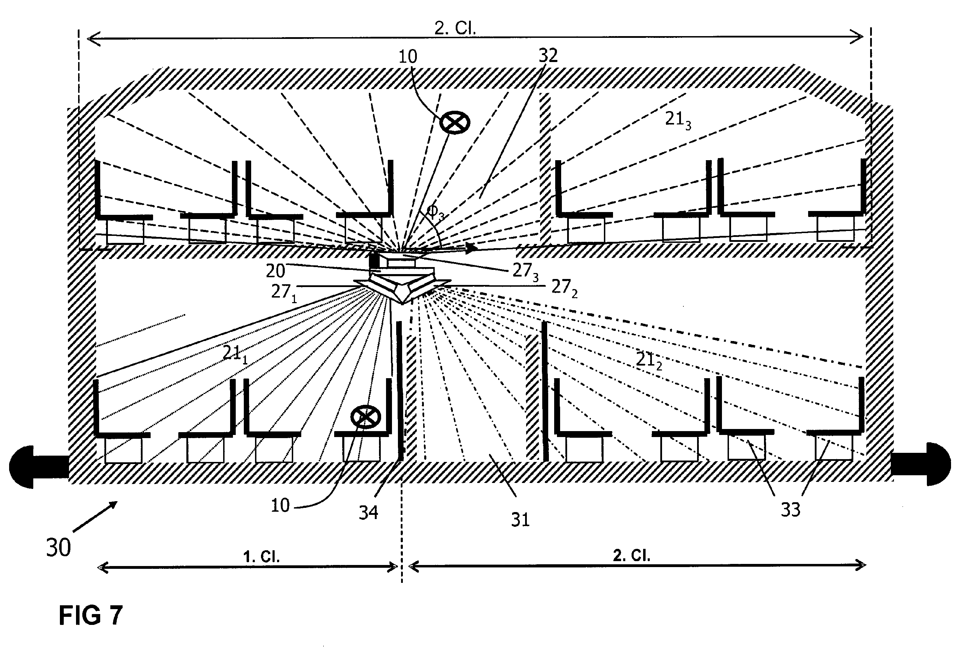

Sowohl im Fernverkehr wie auch im Agglomerationsverkehr werden Doppelstockwagen Dosto bzw. KISS eingesetzt; siehe dazu die Schrift [8]. Die Erfassung und Zuordnung von Passagieren bzw. e-Tickets 10 zu einer Wagenklasse ist in Figur 7 dargestellt. Figur 7 zeigt einen Dosto 30. Der Dosto weist im Obergeschoss nur Plätze 2. Cl. auf, während im Untergeschoss links Plätze in 1. Cl. und rechts Plätze in 2. Cl. vorhanden sind. Dem Eingangsbereich 31 schliesst ein Aufgangsbereich 32 an, der den Zugang in das Obergeschoss vermittelt. Im Eingangsbereich 31 ist an der Decke zwischen Obergeschoss und Untergeschoss eine Sende-/Empfangseinheit 20 montiert. Diese Sende-/Empfangseinheit 20 ist oberhalb der Trennwand 34 von 1. Cl. / Eingangsbereich 31 angeordnet. Ferner wird angenommen, dass ein e-Ticket 10 einem in der 1. Cl. sitzenden Passagier zugeordnet ist. Ein weiteres e-Ticket 10 befinde sich auf einem Passagier im Obergeschoss des Dostos 30. Diese Sende-/Empfangseinheit 20 weist drei Antennen $27_1$, $27_2$ und $27_3$ auf, die je für die Bestimmung des Winkels φ. Sende-/Empfangseinheit 20. Wie bereits bei den Figuren 2 und 3 erläutert, kann mit einer mit drei Antennen $27_1$, $27_2$ und $27_3$ versehenen Sende-/Empfangseinheit 20 die Zuordnung eines e-Tickets 10 zu einer Wagenklasse vorgenommen werden. Im Beispiel gemäss der Figur 7 ist mit dem Bezugszeichen 28 eine sog. Bezugsebene dargestellt. Der gemessene Winkel φ3 erlaubt aufgrund eines Vergleichs diese Zuordnung zur 2. Cl schlüssig vorzunehmen.

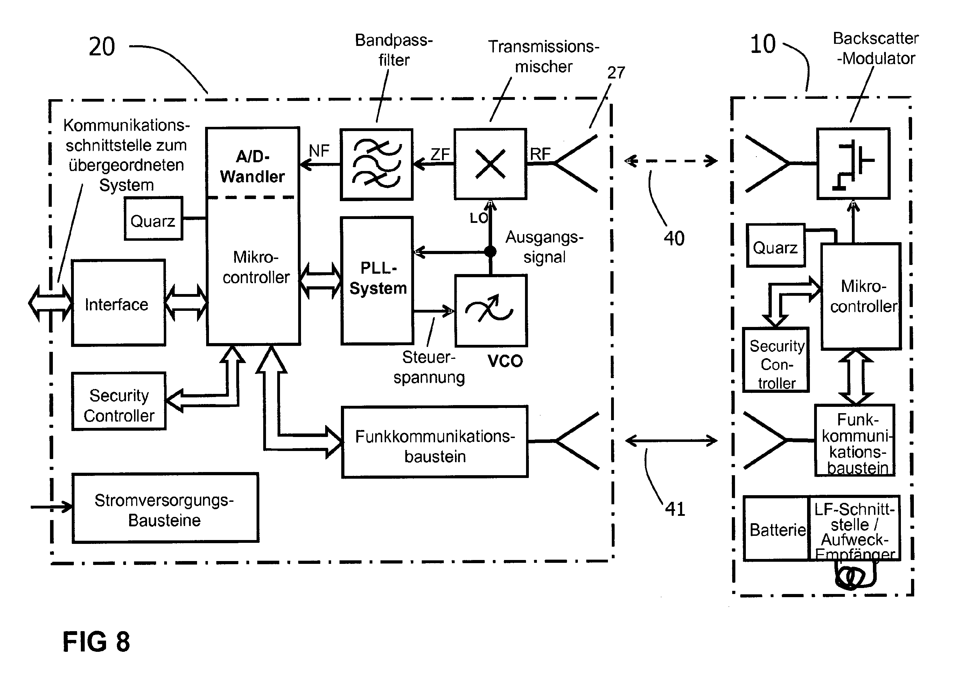

Figur 8 zeigt eine Schaltungsanordnung für eine Abstandsmessung mit einem aus der Radarsystemtechnik bekannten Ansatz. Die Sende-/Empfangseinheit 20 enthält hierbei einen Funkkommunikationsbaustein und eine Antenne für die Datenkommunikation 41 mit dem e-Ticket sowie die Komponenten zu einem kompakten Radar-Abstandsmesssystem: eine Antenne, einen frequenzverstimmbaren Oszillator VCO, ein PLL-System zur Steuerung des Oszillators, einen Transmissionsmischer, ein Bandpassfilter, einen A/D-Wandler zur Erfassung des gewonnenen Nutzsignals (=NF-Signal) und einen Mikrocontroller zur Auswertung und zur Steuerung der Sende-/Empfangseinheit 20. Oft ist ein geeigneter A/D-Wandler bereits im Mikrocontroller enthalten. Ebenso beinhaltet die Sende-/Empfangseinheit 20 weitere Komponenten, wie z. B. einen Quarz zur Taktung des Mikrocontrollers, einen Security Controller zur Authentifizierung und zur Verschlüsselung von Daten, eine Schnittstelle für die Kommunikation mit einer übergeordneten Einheit und eine Stromversorgungseinheit. Es können sich noch weitere Komponenten in der Sende-/Empfangseinheit 20 befinden, wie z. B. Einrichtungen zum Schutz vor Manipulationen. Das e-Ticket 10 enthält ebenfalls einen Funkkommunikationsbaustein und eine Antenne für die Datenkommunikation 41 mit der Sende-/Empfangseinheit 20 sowie Komponenten mit der Funktionalität eines Transponders für ein Radar-Abstandsmesssystem: eine Antenne und einen mit "Backscatter-Modulator" bezeichneten Funktionsblock, der vom ebenfalls enthaltenen Mikrocontroller angesteuert wird. Daneben befinden sich wiederum ein Security Controller zur Authentifizierung und zur Verschlüsselung von Daten im e-Ticket 10 sowie eine Batterie und ein LF-Baustein mit der zugehörigen Antenne. Über den LF-Baustein wird das e-Ticket beim Betreten des öffentlichen Verkehrsmittels 30 aus einem Ruhezustand heraus "aufgeweckt". Hat nun ein erster Datenaustausch zwischen Sende-/Empfangseinheit 20 und e-Ticket 10 stattgefunden, so findet im weiteren Verlauf eine Abstandsmessung statt: Von der Sende-/Empfangseinheit 20 wird über den Transmissionsmischer und die Antenne ein vom VCO generiertes Funksignal 40 in Form einer Frequenzrampe ausgesendet. Dieses Funksignal 40 kann verschieden sein von den Signalen der Datenkommunikation 41. Das Funksignal 40 wird daher zur Unterscheidung zur Datenkommunikation 41 auch Radiokommunikation 40 genannt. Der Transmissionsmischer weist die Eigenschaft auf, dass dessen Isolation zwischen dem LO- und dem RF-Anschluss bewusst niedrig gehalten ist, damit das erzeugte Funksignal mit niedriger Dämpfung zur Antenne gelangen kann. Das ausgesendete Funksignal 40 gelangt zur entsprechenden Antenne im e-Ticket 10. Die Antenne ist mit einer mit "Backscatter-Modulator" bezeichneten Komponente abgeschlossen, dessen komplexe Impedanz sich über einen Steuereingang in einer geeigneten Form variieren lässt. Im gegebenen Beispiel lässt sich über ein logisches Steuersignal der Eingangswiderstand dieses Modulators nahezu ideal zwischen dem Zustand "offen" und dem Zustand «kurzgeschlossen» hin- und herschalten. Beide genannte Zustände des Modulators führen dazu, dass das eintreffende Funksignal von der Antenne aufgenommen, zum Modulator weitergeleitet, vom Modulator reflektiert (da starke Fehlanpassung) und wiederum über die Antenne zur Sende-/Empfangseinheit 20 hin abgestrahlt wird. In beiden Zuständen des Modulators wird also das eintreffende Funksignal 40 vom e-Ticket reflektiert, nur entsprechend des momentanen Zustands des Modulators mit einer veränderlichen Phasenlage. Für die beiden möglichen Zustände des Modulators ergeben sich für das reflektierte Signal im Idealfall Phasenlagen, die sich um 180 Grad voneinander unterscheiden. Während des Durchlaufs der von der Sende-/Empfangseinheit 20 gesendeten Frequenzrampe schaltet der Mikrocontroller im e-Ticket das Steuersignal des Modulators ständig mit einer konstanten Frequenz um. Da der Mikrocontroller mit Hilfe eines Quarzes getaktet wird, lässt sich die Frequenz für den Umschaltvorgang mit einer vergleichsweise hohen Genauigkeit erzeugen. Das vom e-Ticket 10 reflektierte Funksignal zur Abstandsmessung wird von der entsprechenden Antenne 27 in der Sende-/Empfangseinheit 20 wieder aufgenommen und gelangt zurück zum Transmissionsmischer. Hier erfolgt ein Mischvorgang mit dem momentanen Signal des VCOs. Da aufgrund der Laufzeit des Funksignals bis zu dessen Rückkehr zur Sende-/Empfangseinheit 20 eine abstandsabhängige Zeitspanne vergangen ist und sich die Frequenz des VCO während dieser Zeitspanne bereits ein wenig verändert hat, ergibt sich am Ausgang des Mischers als "2F-Signal" prinzipbedingt eine abstandsabhängige Differenzfrequenz $f_{diff\_Ticket}$ gemäss dem FMCW-Abstandsmessverfahren. Da das vom e-Ticket 10 reflektierte Signal 40 zusätzlich mit Hilfe des Backscatter-Modulators mit der Frequenz $f_{mod}$ in dessen Phasenlage moduliert wird, erscheint die Frequenzdifferenz im Spektrum dieses "ZF-Signals" nochmals in Form einer Zweiseitenband-Modulation um die Modulationsfrequenz (und weiteren Vielfachen der Modulationsfrequenz) des e-Tickets 10 herum.

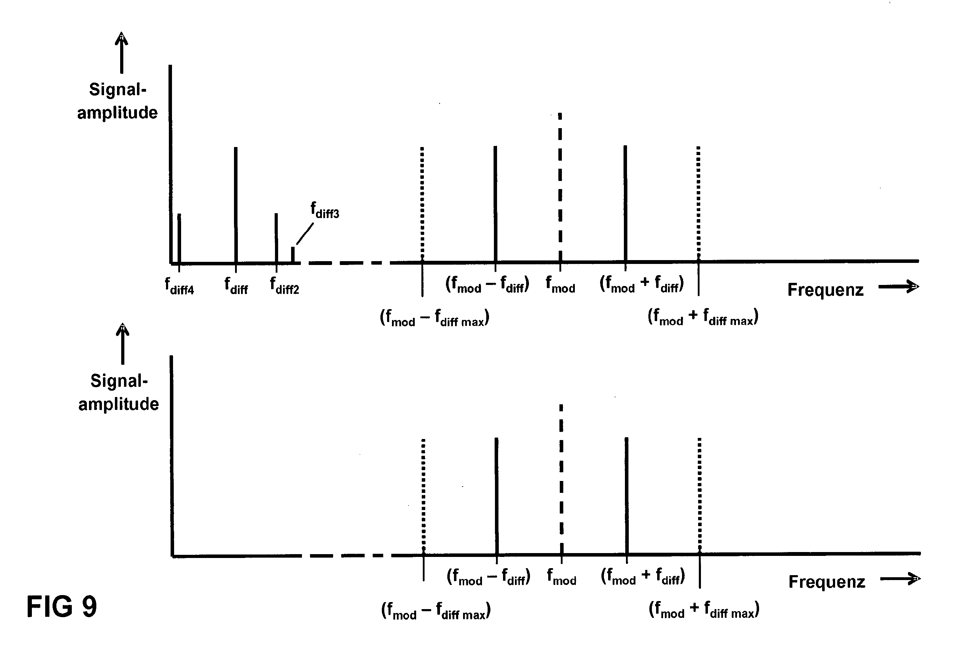

Figur 9 oben zeigt das Spektrum des ZF-Signals am Ausgang des Transmissionsmischers: Neben den gerade beschriebenen spektralen Anteilen sind noch weitere spektrale Anteile $f_{diff2}$, $f_{diff3}$ und $f_{diff4}$ zu erkennen. Diese Anteile stehen beispielhaft für die von weiteren Objekten im Umfeld der Anordnung reflektierten Funksignale: Das von der Sende-/Empfangseinheit 20 ausgesendete Funksignal zur Abstandsmessung wird unbeabsichtigt auch von weiteren Objekten reflektiert, wodurch weitere spektrale Anteile entstehen. Durch die Modulation mit $f_{mod}$ im e-Ticket 10 lässt sich das vom e-Ticket 10 stammende Differenzsignal von den anderen Differenzsignalen unterscheiden: Durchläuft das ZF-Signal das im Blockschaltbild dargestellte Bandpassfilter, so werden Signalanteile mit einer Frequenz deutlich unterhalb von ($f_{mod}$ - $f_{diff\_max}$) unterdrückt, so dass sich das in Fig 9 unten dargestellte Spektrum ergibt. In der Fig 9 sind die Grenzfrequenzen ($f_{mod}$ - $f_{diff\ max}$) und ($f_{mod}$ + $f_{diff\ max}$) für das Bandpassfilter eingetragen. Das NF-Signal wird über den A/D-Wandler erfasst und mit Hilfe des Mikrocontrollers einer Signalverarbeitung unterzogen. Das Signal wird numerisch mit $f_{mod}$ gemischt, einer Tiefpassfilterung unterzogen (so dass nur noch der Signalanteil bei $f_{mod}$ übrig bleibt) und mit geeigneten (und aus dem Bereich der Radarsystemtechnik bekannten) Verfahren die exakte Position des Signalanteils im Spektrum bestimmt. Vorteile der dargestellten Lösung sind die geringe Stromaufnahme und der vergleichsweise geringe Aufwand bei niedrigen Bauteilkosten auf der Seite des e-Tickets 10. Der Backscatter-Modulator lässt sich z. B. durch einen, ggf. entsprechend angepassten, FET realisieren, bei dem der Steuereingang mit dem Gate-Anschluss des FET und die Masse mit dem Source-Anschluss verbunden sind. Wird nun die Spannung am Gate des FET verändert, so ändern sich auch dessen Kanaleigenschaften und damit auch die komplexe Impedanz zwischen dem Drain- und dem Source-Anschluss. Der Backscatter-Modulator lässt sich auch mit Hilfe einer Varaktordiode realisieren oder z. B. durch einen fertig als Bauteil erhältlichen HF-Schalter. Die meisten der vorgeschlagenen Varianten haben gemeinsam, dass eine komplexe Impedanz über eine Steuerspannung am Eingang beeinflussbar ist und dass zumeist nur ein sehr geringer Strom in den Steuereingang der Anordnung fließt. Da das e-Ticket 10 batteriebetrieben ist, erscheint eine niedrige Stromaufnahme als sehr vorteilhaft. Der beschriebene Backscatter-Modulator, der den Fußpunkt einer Antenne abhängig einer angelegten Steuerspannung variabel abschließt und sein Einsatz in Transpondern zur Radar-Abstandsmessung kann als Stand der Technik angesehen werden; siehe z. B. US 2006/0164248 Al oder US 7,076,998 B2 (Assignee Siemens Aktiengesellschaft) zum Stichwort EAMBT. Eine weitere Lösungsmöglichkeit ergibt sich, wenn das Ausgangssignal des VCOs nicht die Form einer kontinuierlichen Frequenzrampe, sondern die Form einer stufenförmig ansteigenden Ausgangsfrequenz aufweist (Stepped-Frequency-Verfahren): Auch hier kann aufgrund der Laufzeit des vom e-Ticket 10 reflektierten Signals und einer durch das e-Ticket 10 eingebrachten Modulation der Abstand zwischen e-Ticket 10 und Sende-/Empfangseinheit 20 ermittelt werden. Eine weitere Variante ergibt sich, wenn das Funksignal zur Abstandsmessung von der Sende-/Empfangseinheit 20 nicht kontinuierlich ausgesendet wird, sondern nur in Form kürzerer Pulse. Eine weitere interessante Variante ergibt sich, wenn auf der Seite des e-Tickets ein Funksignal mit ansteigender Frequenz ausgesendet wird und auf der Seite der Sende-/Empfangseinheit 20 mit einer dort erzeugten zweiten Frequenzrampe, die zeitlich genau passend gestartet wird, gemischt wird. Auch hier würde sich ein Differenzsignal ergeben, das sich in ähnlicher Weise wie oben beschrieben auswerten lässt. Die beschriebenen Verfahren zur Ermittlung eines Entfernungswerts sind aus dem Bereich der Radarsystemtechnik bekannt (Stand der Technik). Die Verwendung zur Erkennung der Position eines e-Tickets im Bereich "E-Ticketing" ist hingegen neu.

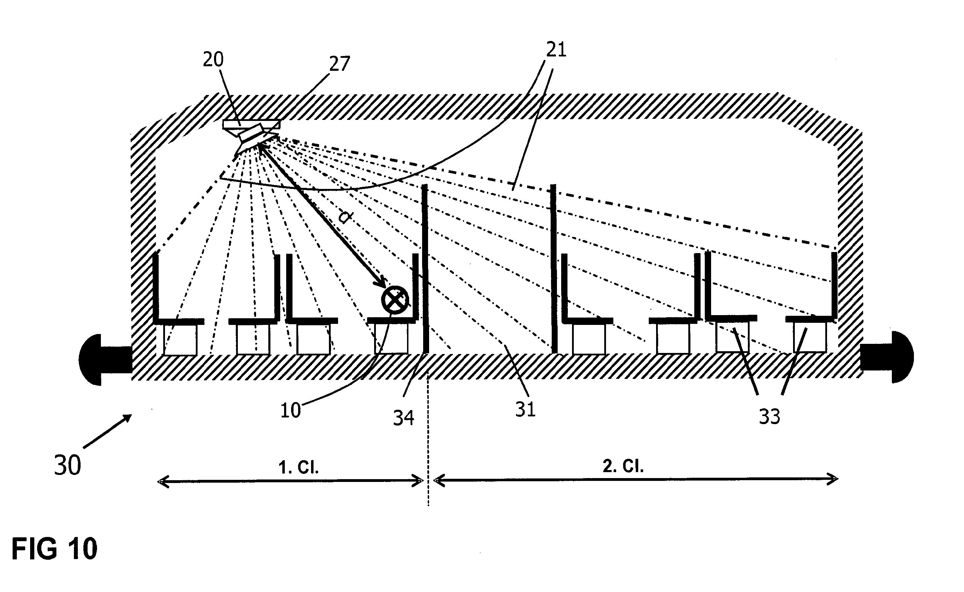

Figur 10 zeigt ein besonders interessantes Ausführungsbeispiel, bei dem sich mit vergleichsweise geringem Aufwand eine Unterscheidung zwischen den beiden Klassen in einem Eisenbahnwagen 30 vornehmen lässt. Eine installierte Sende-/Empfangseinheit 20 befindet sich beispielsweise mittig über dem zur 1. Cl. gehörenden Fahrzeugbereich. Des weiteren ist ein e-Ticket 10 eingezeichnet, dessen Trägerperson der 1. Klasse zuzuordnen wäre. Bei der gegebenen räumlichen Anordnung ist alleine über eine Messung des Abstandes zwischen Sende-/Empfangseinheit 20 und e-Ticket 10 eine Zuordnung des e-Tickets 10 zu einer der beiden Klassen möglich, wenn auch im Übergangsbereich mit einer gewissen "Unschärfe" gerechnet werden muss.

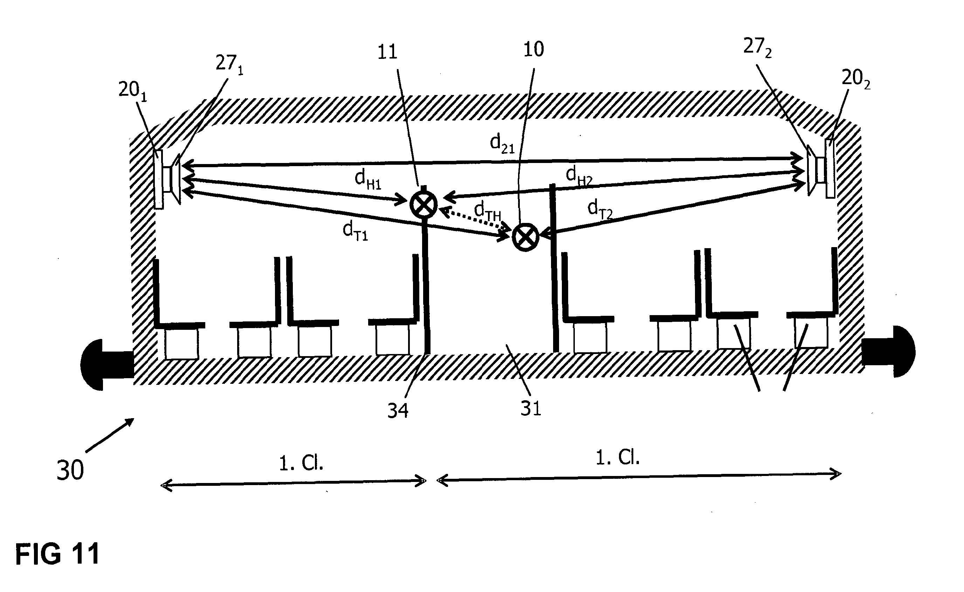

Das in der Figur 11 dargestellte Ausführungsbeispiel basiert auf einem weiteren möglichen Prinzip zur Abstandsmessung, wobei auf der Seite des e-Tickets kein zusätzlicher Hardware-Aufwand notwendig ist. Hier muss lediglich die Mikrocontroller-Software entsprechend angepasst bzw. erweitert werden und es werden zur Erhöhung der Messgenauigkeit evtl. zusätzliche Datenpakete übertragen. Das beschriebene Radar-Abstandmessverfahren wurde z. B. in der Veröffentlichung [7] offenbart: Das Radar-Abstandsmessverfahren beruht darauf, den Abstand zwischen einem Transponder 11 bekannter Position und einem Transponder (=e-Ticket 10) mit zu ermittelnder Position mit Hilfe von zwei Sende-/Empfangseinheiten $20_1$ und $20_2$ über die Auswertung von Laufzeit- und Phasenbeziehungen zu ermitteln. Hierzu ist auf der Seite der Transponder 11 und 10 nur das ungefähr gleichzeitige Versenden standardkonformer, in der Veröffentlichung auf dem Funkstandard IEEE 802.15.4 basierender Datenpakete notwendig. Zur Erhöhung der Messgenauigkeit sollten von den Transpondern 10, 11 nacheinander in verschiedenen Frequenzkanälen Datenpakete versendet werden (Ausnutzung der für das ISM-Band bei 2,45 GHz insgesamt zur Verfügung stehenden Bandbreite von 80 MHz). In der Veröffentlichung [7] ist das Abstandsmessverfahren nur für eine eindimensionale Abstandmessung beschrieben. Bei Bedarf kann das Abstandsmessverfahren auch mehrdimensional zum Einsatz kommen, wobei entsprechend mehr installierte Sende-/Empfangseinheiten 20 erforderlich sind. Die beiden Sende-/Empfangseinheiten $20_1$ und $20_2$ sind im gegebenen Beispiel im oberen Bereich der beiden Stirnseiten im Wagenabschnitt installiert. Unterhalb eines Griffes ist in der Wandung zur Abtrennung zwischen 1. und 2. Klasse ein Hilfstransponder 11 untergebracht. Ein Nutzer bleibt zur Fahrt im (zur 2. Klasse gehörenden) Eingangsbereich stehen und trägt das e-Ticket 10 in einer Hemdtasche. Die sich ergebenden Abstände sind in der Figur 11 wie folgt bezeichnet:

$d_{21}$     Abstand zwischen den beiden installierten Sende-/Empfangseinheiten $20_1$ und $20_2$;

$d_{H1}$     Abstand zwischen Hilfstransponder 11 und Sende-/Empfangseinheiten $20_1$ (Messung über Laufzeit $\tau_{H1}$) ;

$d_{H2}$     Abstand zwischen Hilfstransponder und Sende-/Empfangseinheiten $20_2$ (Messung über Laufzeit $\tau_{H2}$) ;

$d_{T1}$     Abstand zwischen e-Ticket 10 und Sende-/Empfangseinheiten $20_1$ (Messung über Laufzeit $\tau_{T1}$) ;

$d_{T2}$     Abstand zwischen e-Ticket 10 und Sende-/Empfangseinheit $20_2$ (Messung über Laufzeit $\tau_{T2}$) ;

$d_{TH}$     Abstand zwischen e-Ticket 10 und Hilfstransponder 11; $d_{TH}$ ist zu ermitteln entsprechend der Laufzeit $\tau_{TH}$.

Die von den standardkonformen Funkschnittstellenbausteinen im e-Ticket 10 und Hilfstransponder 11 ausgesendeten Datenpakete können nur endlich genau gleichzeitig übertragen werden, wodurch eine Zeitdifferenz $\tau_{Offset}$ zwischen den von e-Ticket 10 und Hilfstransponder 11 übertragenen Datenpaketen entsteht. Da jedes ausgesendete Datenpaket jedoch von beiden Sende-/Empfangseinheiten $20_1$ und $20_2$ gleichzeitig empfangen wird und da es eine zeitliche Überlappung zwischen den von e-Ticket 10 und Hilfstransponder 11 übertragenen Datenpaketen gibt, kann diese Zeitdifferenz $\tau_0$ bei der Berechnung der Laufzeit $\tau_{TH}$ eliminiert werden, so dass sich die Laufzeit $\tau_{TH}$ nach folgender Formel berechnen lässt:

$$\tau_{TH} \approx \tfrac{1}{2}\,(\tau_{T1} - \tau_{H1} - \tau_{T2} + \tau_{H2}) \qquad (1)$$

Da beim vorgestellten Beispiel die beteiligten Einheiten 10, 11 $20_1$ und $20_2$ räumlich nicht genau auf einer geraden Linie zueinander liegen, das vorgestellte Verfahren aber anhand einer eindimensionalen Realisierung erläutert wird, lässt sich so der Abstand zwischen e-Ticket 10 und Hilfstransponder 11 nur ungefähr ermitteln, weshalb in Formel (1) das Zeichen $\approx$ eingesetzt wurde. Für einen praktischen Einsatz reicht die so erzielte Genauigkeit unter Umständen bereits aus (z. B. für die Zuordnung eines e-Tickets zu einer Klasse). Über die Ausbreitungsgeschwindigkeit elektromagnetischer Wellen in Luft (annähernd Lichtgeschwindigkeit $c_0$) lässt sich der Abstand $d_{TH}$ zwischen e-Ticket 10 und Hilfstransponder 11 anhand von Formel (2) berechnen:

$$d_{TH} = c_0 * \tau_{TH} \qquad (2)$$

Da es sich bei $\tau_{TH}$ um einen Laufzeitunterschied handelt, kann dieser Wert beim gegebenen Beispiel ein positives oder negatives Vorzeichen aufweisen. Somit kann $d_{TH}$ ebenfalls ein positives oder negatives Vorzeichen aufweisen, was sich einer Position des e-Ticket 10 rechts (positives Vorzeichen) oder links (negatives Vorzeichen) vom Hilfstransponder 11 zuordnen lässt. Über eine zusätzliche Auswertung von Phasenverhältnissen kann der Abstand $d_{TH}$, ähnlich zum beschriebenen Verfahren mit der Auswertung von Laufzeitunterschieden, noch genauer bestimmt werden. In der genannten Veröffentlichung [7] wird hierauf näher eingegangen.

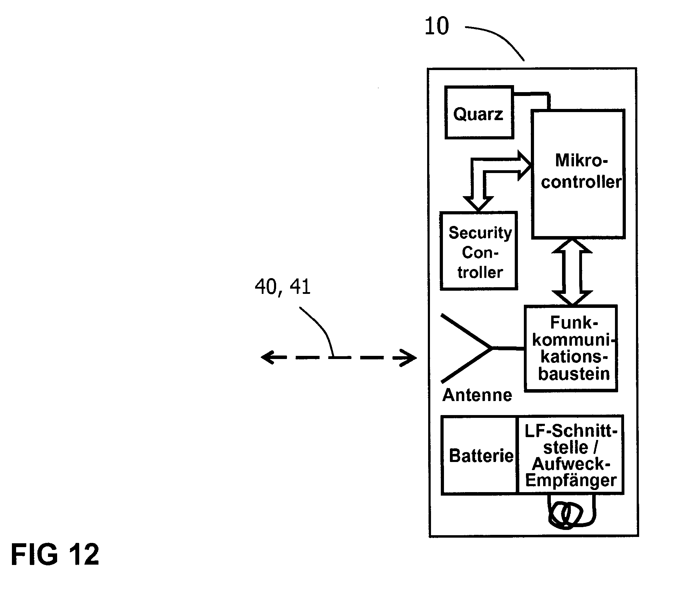

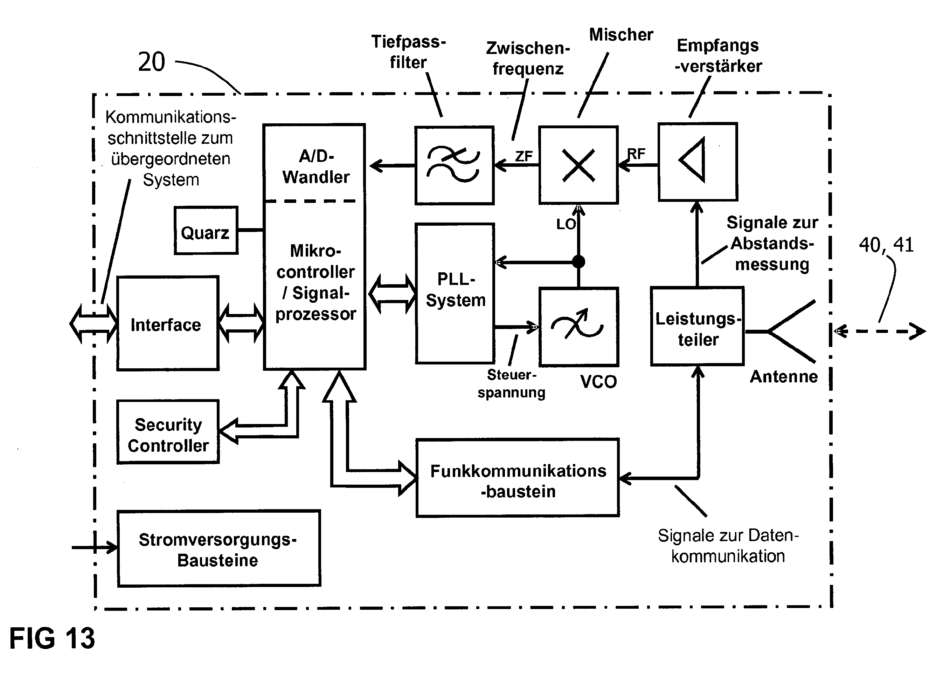

Die Funktionalität von e-Ticket 10 und Sende-/Empfangseinheit 10 hinsichtlich der Abstandsmessung wird anhand der in den Figuren 12 und 13 enthaltenen Blockschaltbilder erläutert.

Figur 12 zeigt das Blockschaltbild eines e-Tickets 10. Es unterscheidet sich, wie oben bereits beschrieben, nicht von dem eines e-Tickets 10, das die Funktionalität zur Abstandsmessung nicht unterstützt. Das Blockschaltbild des oben beschriebenen Hilfstransponders 11 ist dem des e-Tickets 10 sehr ähnlich; in der Praxis wird der Hilfstransponder 11 aber nicht über eine Batterie, sondern über einen festen Anschluss mit elektrischer Energie versorgt. Sowohl das e-Ticket 10 gemäss der Figur 12 wie auch gemäss der Figur 8 enthalten eine LF-Schnittstelle und einen Aufweckempfänger. Dies ist - wie bereits einleitend festgehalten - für die vorliegende Erfindung unwesentlich. Die Erfindung deckt insbesondere den Fall ab, bei denen die e-Tickets 10 anders als durch ein Wecksignal in den Betriebszustand gebracht werden, sei es auch, dass die e-Tickets 10 dank den leistungsfähigeren Batterien und dem noch kleineren Energieverbrauch dank integrierter Bauelemente eine Autonomie von mehreren Jahren Dauerbetrieb aufweisen.

Figur 13 zeigt eine Sende-/Empfangseinheit 20 mit einem Leistungsteiler, der die Signale von und zur Antenne auf den Funkkommunikationsbaustein und die Funktionsblöcke zur Abstandsbestimmung aufteilt. Der Baustein zur Funkdatenkommunikation wird hier ausschließlich zum Austausch von Datenpaketen verwendet. Über Datenpakete werden auch die Zeitpunkte von Messvorgängen mitgeteilt. Die über Antenne und Leistungsteiler eingehenden Signale zur Abstandsmessung (vom e-Ticket 10 und Hilfstransponder 11 gesendete Datenpakete) werden zunächst verstärkt und dann mit Hilfe eines Lokaloszillators (im Beispiel aufgebaut aus einem VCO und einem PLL-Baustein) und eines Mischers auf eine Zwischenfrequenzebene gesetzt. Anschließend wird der interessierende Frequenzbereich (üblicherweise etwas größer gewählt als die für alle Kanäle zusammen maximal nutzbare Bandbreite im verwendeten Frequenzband) mit Hilfe eines Tiefpassfilters herausgefiltert und einem Analog-Digitalwandler zugeführt. Dessen Abtastrate wird mindestens doppelt so hoch gewählt wie die höchsten Frequenzanteile, die am Eingang des A/D-Wandlers auftreten können (Abtasttheorem). Im Rahmen der Signalverarbeitung wird das analoge Signal beispielsweise zunächst für eine bestimmte Zeit aufgezeichnet und in einem lokalen Speicher abgelegt. Anschließend werden die einzelnen empfangenen Kanäle voneinander getrennt weiterbehandelt. Oftmals wird in modernen Funkkommunikationsbausteinen das Modulationsverfahren DSSS eingesetzt. Es können auch weitere übliche Modulationsverfahren zur Abstandsbestimmung mit Hilfe des beschriebenen Verfahrens genutzt werden. Mittenfrequenz, Bandbreite eines einzelnen Kanals und die Frequenz eines einzelnen Schrittes (sog. "Chip Rate") sind bekannt, so dass sich hier leicht der Nutzinhalt und einzelne Eigenschaften der empfangenen Datenpakete ermitteln lassen. Wurden die Datenpakete von beiden Transpondern 10, 11 (dem E-Ticket 10 und dem Hilfstransponder 11) in etwa gleichzeitig gesendet, und entspricht die Reihenfolge der Kanalbelegung nacheinander gesendeter Datenpakete einer vorgegebenen, günstig gewählten Struktur, so können hieraus die oben beschriebenen Laufzeit- und Phasenverhältnisse gebildet werden.

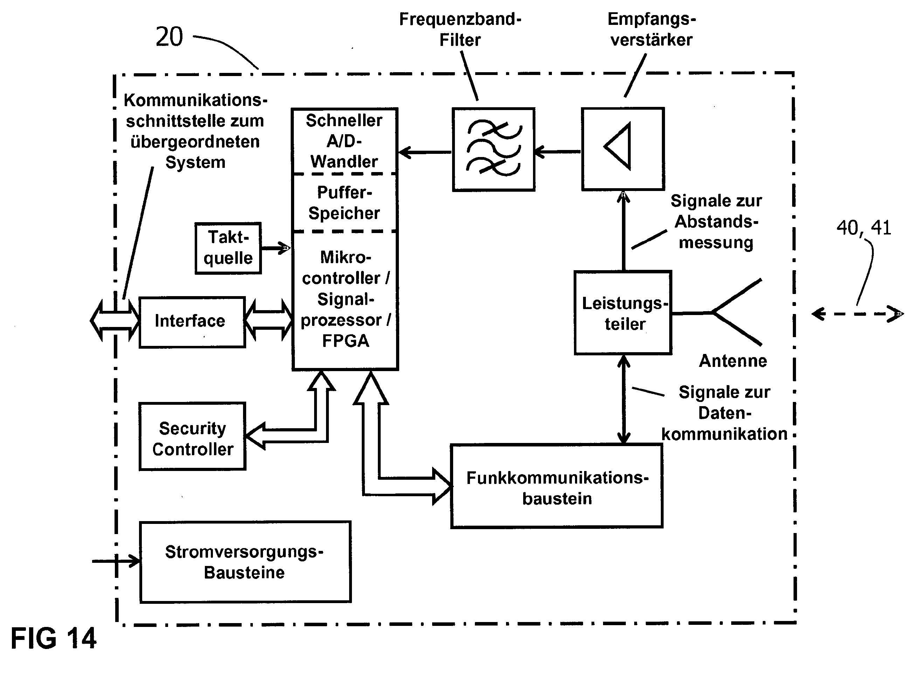

In Figur 14 ist das Blockschaltbild einer weiteren möglichen Variante für eine Sende-/Empfangseinheit 20 zum zuvor beschriebenen Verfahren dargestellt. Der Unterschied zum in Figur 12 dargestellten System besteht darin, dass hier das Funksignal zur Abstandsmessung nicht erst mit Hilfe eines Mischers auf eine Zwischenfrequenzebene umgesetzt wird, sondern über einen sehr schnellen A/D-Wandler direkt abgetastet und abschnittsweise in einem schnellen Pufferspeicher abgelegt wird. Die Umsetzung auf eine geeignete Frequenzebene bzw. die Zuordnung zu den einzelnen genutzten Frequenzkanälen findet hier anschließend numerisch statt.

Durch einen oder mehrere im Wagen installierte Hilfstransponder 11 lassen sich die erzielbare Genauigkeit und / oder die Zuverlässigkeit der relativen Positionsbestimmung weiter verbessern. Diese Hilfstransponder 11 können im Prinzip genau so aufgebaut sein wie die e-Tickets, werden jedoch an bestimmten Einbauorten im Wagen fest installiert. Wahlweise könnten diese Hilfstransponder 11 durch Batterien oder auch durch fest installierte Leitungen mit Energie versorgt werden. Mit Hilfe dieser Hilfstransponder 11 kann die Sende-/Empfangseinheit 20 die e-Tickets 10 präziser orten, da ein Vergleich zwischen den Messwerten bezüglich des betreffenden Hilfstransponders 11 mit bekannter Lage und bezüglich des e-Tickets 10 gezogen werden kann. Vorteilhafte Einbaupositionen für einen Hilfstransponder 11 ist der Übergangsbereich 34 zwischen zwei Klassen in einem Verkehrsmittel 30. Hier könnte beispielsweise die Grenze zw. 1. und 2. Klasse in Fig. 7 angegeben werden (nicht eingezeichnet in Figur 7), wo sich der Hilfstransponder 11 in der Trennwand 34 zwischen Eingangsbereich 31 und den Sitzen der 1. Klasse befinden könnte. In Fig. 11 ist ein Hilfstransponder 11 gezeigt, der bereits zur Umsetzung des weiter oben beschriebenen Abstandsmessverfahrens durch Berechnung von Abstandsverhältnissen zum Einsatz kommt. Wäre in einer solchen Anordnung zusätzlich eine Sende-/Empfangseinheit 20 unter der Decke des Wagens genau über dem Übergang von 1. zur 2. Klasse installiert (in Fig. 11 nicht eingezeichnet), so kann dieser Hilfstransponder 11 bei einer zusätzlich erfolgenden Winkelbestimmung dazu dienen, die Messgenauigkeit und die Zuverlässigkeit zu verbessern.

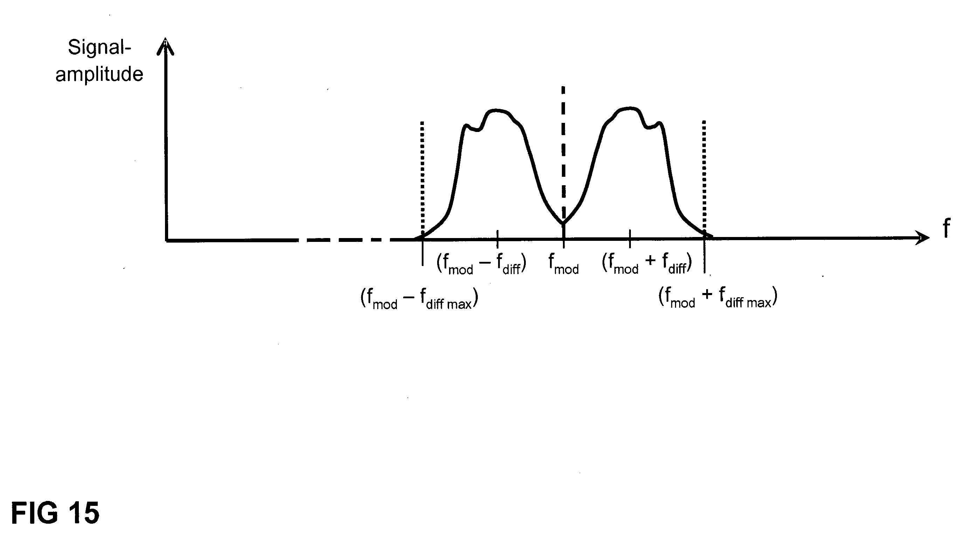

Zur Auswertung von Signalen zur Abstands- und Winkelmessung sind unter schwierigen Umständen auch aus der Radarsignalverarbeitung bekannte "unscharfe" Verfahren, wie z. B. Fuzzy-Algorithmen, geeignet. In Fig. 15 ist ein Zwischenfrequenz-Signalspektrum wie bereits in Fig. 9 im unteren Bereich abgebildet, nun allerdings nicht in idealisierter Darstellung, sondern wie es unter schwierigen Bedingungen im Wagen, bei vielen Passagieren und Mehrfachreflexionen, wie es in der Praxis vorkommt: Hier befindet sich an den Stellen ($f_{mod} - f_{diff}$) bzw. ($f_{mod} + f_{diff}$) keine vertikale Linie im Spektrum, sondern eine breite Kuppe, die unsymmetrisch verzerrt ist und eine Nebenspitze aufweist. Die Ursache für eine breite Kuppe kann dabei z. B. eine eingeschränkte Bandbreite beim Messvorgang sein. Unscharfe Auswerteverfahren, wie z. B. Fuzzy-Algorithmen, helfen, die genaue Lage der Spitze der Kuppe, und damit den Abstand zwischen Sende-/Empfangseinheit 20 und e-Ticket 10 trotz der ungünstigen Bedingungen relativ genau zu ermitteln. Ebenso wie beim Verfahren zur Fig. 9 erwähnt, können diese unscharfen Verfahren auch bei FMCW-Abstandsmessungen bzw. Winkelmessverfahren zum Einsatz kommen.

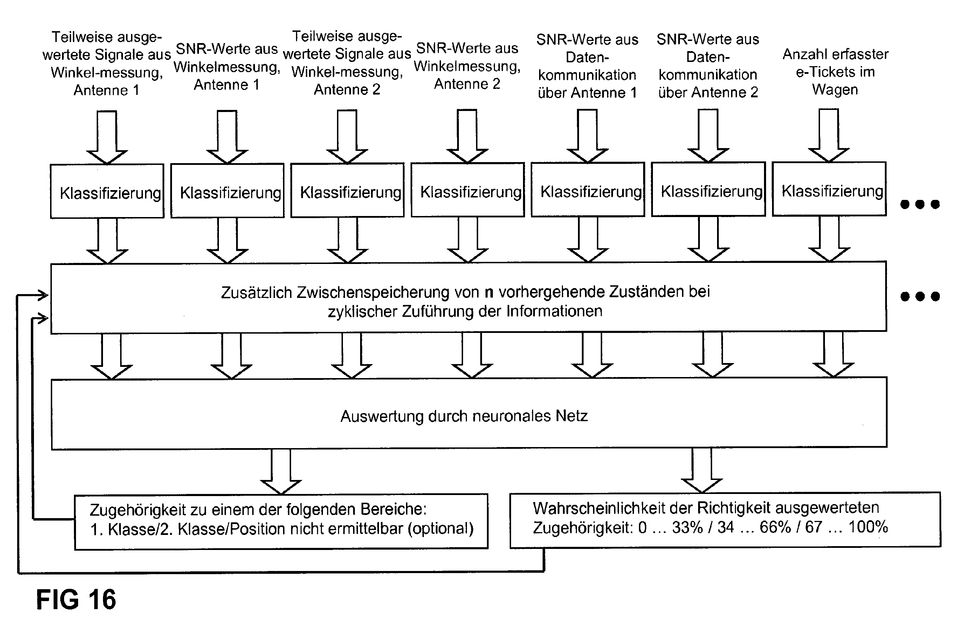

Eine weitere Möglichkeit zur Auswertung von auch unter sehr ungünstigen Bedingungen erzielter Messsignale stellt die Auswertung mit Hilfe eines neuronalen Netzes dar. Wenn z. B. nur ein einziges Lesegerät in einem Wagen installiert werden kann und trotzdem vergleichsweise zuverlässig über eine Winkelmessung die relative Position eines e-Tickets im Wagen zur Unterscheidung zwischen 1. und 2. Klasse herangezogen werden kann, aber eine reine Auswertung der Signale aus der Winkelmessung, z. B. aufgrund der Anwesenheit vieler Personen in einem Verkehrsmittel 30 oder aufgrund von Mehrfachreflexionen, keine ausreichend guten Ergebnisse liefert, so können mit Hilfe eines neuronalen Netzes viele weitere Informationen zur Auswertung herangezogen werden, um trotzdem eine Bestimmung der relativen Position zu ermöglichen. Hierzu müssen dem neuronalen Netz so viele Informationen wie möglich zugeführt werden. Fig. 16 zeigt beispielhaft den Informationsfluss zur Auswertung entsprechender Informationen mit Hilfe eines neuronalen Netzes. Die zugeführten Informationen müssen zunächst einer Klassifizierung unterzogen werden, d. h. sie werden jeweils einer von m möglichen Wertebereichen zugeordnet. Anschließend werden die so klassifizierten Informationen zusammen mit n vorangegangenen Zuständen dieser Signale (Zwischenspeicherung zyklisch erfasster Informationen) dem neuronalen Netz zur Auswertung zugeführt. Das Ergebnis der Auswertung über das neuronale Netz besteht im gegebenen Beispiel wie folgt:

i) Angabe zur Zugehörigkeit der Position des betreffenden e-Tickets 10 zu einem der Bereiche «1. Klasse», «2. Klasse» oder in der Angabe «Position nicht ermittelbar».
ii) Angabe zur Wahrscheinlichkeit, mit die Angabe i) gemacht wird.

Selbstverständlich muss das neuronale Netz, entweder bei der Entwicklung des Systems oder zum Zeitpunkt der Installation im Verkehrmittel 30, einem Anlernvorgang unterzogen werden, bei dem viele mögliche Positionen des e-Tickets 10 unter möglichst vielen verschiedenen Randbedingungen und die zugehörigen gewünschten Ergebnisse vorgegeben werden.

Die Auswertung von Signalen aus Funksystemen zur Positionsbestimmung mit Hilfe von neuronalen Netzen ist bekannt, neu hingegen ist die Anwendung solcher Verfahren im Zusammenhang mit e-Ticketing-Systemen und die Einspeisung weiterer spezifischer Informationen (wie z. B. die Anzahl erfasster e-Tickets im betreffenden Wagen). Die Berücksichtigung des in Verbindung mit einer Auswertung über ein neuronales Netz dargestellten zeitlichen Verlaufs von Messsignalen (Historie) kann auch in Verbindung mit den zuvor dargestellten Auswerteverfahren zum Einsatz kommen, hier natürlich in Form konkreter Listen mit n vorangegangenen Messwerten. So lassen sich unter Umständen hier ebenfalls Messgenauigkeit und Zuverlässigkeit (z. B. über Plausibilitätstests) des Systems erhöhen.

**Liste der Bezugszeichen, Glossar**

| | |
|---|---|
| 10 | e-Ticket, Position eines e-Tickets |
| 11 | Hilfstransponder, in einer Abtrennung innerhalb eines Verkehrsmittels untergebracht |
| 20 | Sende-/Emfangseinheit |
| 21, $21_1$, $21_2$, $21_3$ | Erfassungsbereich einer Sende-/Emfangseinheit |
| 22 | Gerichtete Antennen |
| 23 | Vorzugsrichtung ggf. eintreffender Funksignale |
| 24 | Mikrocontroller, Stromversorgung, Schnittstellen nach außen |
| 25 | Sendeantenne mit geringer Richtwirkung |
| 26 | Empfangsantenne zur Winkelmessung |
| 27, $27_1$, $27_2$, $27_3$ | Antenne |
| 28 | Bezugsrichtung, Bezugsebene für die Messung des Winkels $\varphi$ |
| 30 | Verkehrsmittel; Eisenbahnwagen, Schiff, Bus |
| 31 | Eingangsbereich |
| 32 | Aufgangsbereich eines Wagens |
| 33 | Sitz, Sitzplatz |
| 34 | Trennwand Eingangsbereich/Fahrgastraum mit Sitzen; Grenze zwischen zwei Bereichen des Verkehrsmittels; Übergangsbereich |
| 35 | Fenster |
| 36 | Boden |
| 40 | Funksignal zur Abstands- und/oder Winkelmessung; Radiokommunikation |
| 41 | Funksignal zur Datenkommunikation |
| 1. Cl., 2. Cl. | Bezeichnung von Bereichen in einem Verkehrsmittel, 1. Klasse - Abteil, 2. Klasse Abteil |
| d, $d_1$, $d_2$, $d_3$, $d_4$; $d_{T1}$; $d_{T2}$; $d_{TH}$; $d_{H1}$, $d_{H2}$ | Abstand zwischen E-Ticket und Lese-/Empfangseinheit; Abstand zwischen E-Ticket und Hilfstransponder; Abstand zwischen Hilfstransponder und Lese-/Empfangseinheit |
| $\varphi$, $\varphi_1$, $\varphi_2$, $\varphi_3$ | Winkel zwischen einer Bezugsrichtung oder Bezugsebene und der Verbindungslinie E-Ticket und Lese-/Empfangseinheit |
| m | Anzahl Wertebereiche für die Klassifizierung |
| n | Anzahl Messwerte, Anzahl vorangegangener Zustände |
| CW | Continuous Wave |
| DSSS | Direct Sequence Spread Spectrum |
| FET | field-effect transistor; Feldeffekttransistor |

| | |
|---|---|
| FMCW | Frequency-modulated Continuous Wave) |
| OeV, ÖV | Öffentlicher Verkehr |
| PLL | Phase Locked Loop |
| RF | Radiofrequenz |
| RhB | Rhätische Bahn, www.rhb.ch |
| RX | receiver, eigenständige Empfängerbausteine, die u.a. Informationen zum Empfangspegel liefern |
| SBB | Schweizerische Bundesbahnen AG, www.sbb.ch |
| SGV | Schifffahrtsgesellschaft des Vierwaldstättersees (SGV) AG, www.lakelucerne.ch |
| TX | transceiver, Sendebaustein |
| UWB | Ultra Wide Band |
| ZF | Zwischenfrequenz |
| ZVV | Züricher Verkehrsverbund, www.zvv.ch |

**Liste der zitierten Dokumente**

[1] EP 1 210 693 B1
«Verfahren und System zur Registrierung von Billetten» Inhaberin am 31. Mai 2012

[2] US 7,924,160 B1
«Real-time ranging and angle measurements using radar and surface acoustic wave transponders»
Assignee: Massachusetts Institute of Technology, Cambridge, MA (US)

[3] Decawave
«Real time location systems»
An Introduction Version 1.00 © 2010
Retrieved from http://www.decawave.com on 2012-05-16

[4] «ScenSor Precision Location Ultra Low Power Transceiver»
Advance product information dw1000
© 2011 DecaWave Ltd.
Controlled Document Number D0801004DS7
http://www.decawave.com

[5] «E-Ticketing»
Siemens Schweiz AG, Industry Sector, Mobility Division, Rail Automation
**www.litra.ch/download.php?file=dcs/users/2/3 20110316 MF dt.pdf**
und
**http://www.litra.ch/dcs/users/2/3 20110316 MF dt.pdf**

[6] «Inhalt und Struktur der Spezifikationen/Kundenschnittstelle und Zertifizierung in der VDV-Kernapplikation» Präsentation von Dipl.-Ing. Elke Fischer
VDV-KERNAPPLIKATIONS GmbH & Co. KG
http://www.eticket-deutschland.de/

[7] Stefan Schwarzer∗†, Martin Vossiek†, Markus Pichler‡ and Andreas Stelzer§
∗ Siemens AG, Otto-Hahn-Ring 6, 81379 Munich, Germany;
† Institute of Electrical Information Technology, Clausthal University of Technology, Germany;
‡ Linz Center of Mechatronics GmbH, Linz, Austria

§ Institute for Communications and Information Engineering, Johannes Kepler University, Linz, Austria
«Precise Distance Measurement with IEEE 802.15.4 (ZigBee) Devices»
1-4244-1463-6/08/$25.00 © 2008 IEEE 779 RWS 2008

[8] Elektrischer Doppelstocktriebzug KISS (6-teilig) für die Schweizerischen Bundesbahnen (SBB)

Quelle:

www.stadlerrail.com heruntergeladen am 9. Juni 2012.

[9] Texas Instruments TI
Wireless Connectivity; 1 Q 2011 / SLAB056:

- proprietäre Bausteine für Arbeitsfrequenzen unterhalb von 1 GHz,
- ZigBee-kompatible Bausteine,
- proprietäre Bausteine für das ISM-Band bei 2,45 GHz. Retrieved from http://Ti.com on 2012-06-12.

[10] Atmel, San Jose, California
Integrated, Standalone and Module wireless solutions
http://www.atmel.com/products/wireless/default.aspx

## Patentansprüche

**1.** Verfahren zur Registrierung einer definierten Anwesenheit von e-Tickets (10) in einem Verkehrsmittel (30), welche e-Tickets (10) Sende-/Empfangsmittel enthalten für eine Kommunikation (41) mit einer im Verkehrsmittel (30) angeordneten Sende-/Empfangseinheit (20), bei welcher Kommunikation (41) Daten zur Registrierung der definierten Anwesenheit zur Sende-/Empfangseinheit (20) übermittelt werden;
**dadurch gekennzeichnet, dass**
mit einer Radiokommunikation (40) zwischen einem e-Tickets (10) und der Sende-/Empfangseinheit (20) eine Registrierung des relativen Orts ($\varphi$, $\varphi_1$, $\varphi_2$; d, $d_1$, $d_2$, $d_3$, $d_4$; $d_{T1}$, $d_{T2}$; $d_{TH}$) des e-Tickets (10) bezüglich des Verkehrsmittels (30) in der der Sende-/Empfangseinheit (20) vorgenommen wird.

**2.** Verfahren nach Anspruch 1,
**dadurch gekennzeichnet, dass**
der relative Ort des e-Tickets (10) durch eine Messung des Winkels ($\varphi$, $\varphi_1$, $\varphi_2$, $\varphi_3$) zwischen der Sende-/Empfangsrichtung vom e-Ticket (10) und einer Bezugsrichtung (28) oder einer Bezugsebene (28) innerhalb des Verkehrsmittels (30) bestimmt wird.

**3.** Verfahren nach Anspruch 2,
**dadurch gekennzeichnet, dass**
die Bezugsebene (28) relativ zum Verkehrsmittel (30) vertikal oder horizontal festgelegt ist.

**4.** Verfahren nach einem der Ansprüche 1 bis 3,
**dadurch gekennzeichnet, dass**
die Sende-/Empfangseinheit (20) an einer Grenze (34) zwischen zwei innerhalb des Verkehrsmittels (30) verschiedenen Bereichen (1. Cl., 2. Cl.) installiert ist und dass der Winkel ($\varphi$, $\varphi_1$, $\varphi_2$, $\varphi_3$) zwischen e-Ticket (10) und einer Bezugslinie (34) oder einer Bezugsebene (34) aus Sicht der Sende-/Empfangseinheit (20) für die Zuordnung zu einem der beiden Bereiche (1. Cl., 2. Cl.) herangezogen wird.

**5.** Verfahren nach einem der Ansprüche 1 bis 4,
**dadurch gekennzeichnet, dass**
der relative Ort des e-Tickets (10) durch eine Messung des Abstandes (d, $d_1$, $d_2$, $d_3$, $d_4$; $d_{T1}$, $d_{T2}$; $d_{TH}$) zwischen der Sende-/Empfangseinheit (20) und dem e-Ticket (10) bestimmt wird.

**6.** Verfahren nach Anspruch 5,
**dadurch gekennzeichnet, dass**
die Messung des Abstandes zwischen Sende-/Empfangseinheit (20) und dem e-Ticket (10) über die Laufzeit eines zwischen e-Ticket (10) und der Sende-/Empfangseinheit (20) übermittelten Signals (40) oder über eine Auswertung eines Pegels des von der Sende-/Empfangseinheit (20) empfangenen Signals (40) erfolgt.

**7.** Verfahren nach Anspruch 5 oder 6,
**dadurch gekennzeichnet, dass**
wenigstens ein im Verkehrsmittel (30) fest angeordneter Hilfstransponder (11) vorgesehen ist, so dass die Registrierung des relativen Orts ($d_{T1}$, $d_{T2}$; $d_{TH}$; $d_{H1}$, $d_{H2}$) des e-Tickets (10) bezüglich des Verkehrsmittels (30) über den im Verkehrsmittel (30) bekannten Ort ($d_{H1}$, $d_{H2}$) des Hilfstransponders (11) vorgenommen wird.

8.  Verfahren nach Anspruch 7,
    **dadurch gekennzeichnet, dass**
    der Hilfstransponder (11) drahtgebunden mit einer Sende-/Empfangseinheit (20) verbunden ist.

9.  Verfahren nach Anspruch 5 oder 6,
    **dadurch gekennzeichnet, dass**

    - wenigstens ein im Verkehrsmittel (30) fest angeordneter Hilfstransponder (11) vorgesehen ist und dass dessen relativer Ort ($d_{H1}$, $d_{H2}$) im Verkehrsmittel in der Sende-/Empfangseinheit (20) mit Daten ($d_{H1}$, $d_{H2}$) gespeichert ist,
    - mit einer weiteren Radiokommunikation (40) zwischen dem Hilfstransponder (11) und der Sende-/Empfangseinheit (20) eine Registrierung des relativen Orts ($d_{H1'}$, $d_{H2'}$) des Hilfstransponders (10) bezüglich des Verkehrsmittels (30) vorgenommen und mit den in der Sende-/Empfangseinheit (20) gespeicherten Daten ($d_{H1}$, $d_{H2}$) verglichen wird und als eine Abweichung registriert wird, und dass
    - die Registrierung des relativen Orts (d) des e-Tickets (10) bezüglich des Verkehrsmittels (30) mit der vorgenannten Abweichung kompensiert wird.

10. Verfahren nach einem der Ansprüche 1 bis 9,
    **dadurch gekennzeichnet, dass**
    der relative Ort ($\varphi$, $\varphi_1$, $\varphi_2$; d, $d_1$, $d_2$, $d_3$, $d_4$; $d_{T1}$, $d_{T2}$; $d_{TH}$) des e-Tickets (10) bezüglich des Verkehrsmittels (30) mit mehreren Sende-/Empfangseinheiten (20; $20_1$, $20_2$) bestimmt wird.

11. Verfahren nach einem der Ansprüche 1 bis 10,
    **dadurch gekennzeichnet, dass**
    für die Radiokommunikation (40) die Kommunikation (41) zur Registrierung der definierten Anwesenheit des e-Tickets (10) herangezogen wird, so dass keine zusätzliche Frequenz für die Registrierung des relativen Ortes ($\varphi$, $\varphi_1$, $\varphi_2$; d, $d_1$, $d_2$, $d_3$, $d_4$; $d_{T1}$, $d_{T2}$; $d_{TH}$) des e-Tickets (10) erforderlich ist.

12. Verfahren nach einem der Ansprüche 1 bis 11,
    **dadurch gekennzeichnet, dass**
    die Daten des relativen Ortes ($\varphi$, $\varphi_1$, $\varphi_2$; d, $d_1$, $d_2$, $d_3$, $d_4$) eines e-Tickets (10) einem unscharfen Auswerteverfahren - vorzugsweise Fuzzy-Algorithmen - unterzogen werden um eine genauere Bestimmung des relativen Ortes des e-Tickets (10) herbeizuführen.

13. Verfahren nach einem der Ansprüche 1 bis 11,
    **dadurch gekennzeichnet, dass**
    die Daten des relativen Ortes ($\varphi$, $\varphi_1$, $\varphi_2$; d, $d_1$, $d_2$, $d_3$, $d_4$) eines e-Tickets (10) mehrfach ermittelt werden und mittels einem neuronalen Netz eine Bestimmung des relativen Ortes des e-Tickets (10) mit Angabe einer bestimmten Wahrscheinlichkeit herbeizuführen.

14. System zur Registrierung einer definierten Anwesenheit von e-Tickets (10) in einem Verkehrsmittel (30), welche e-Ticket (10) ein Sende-/Empfangsmittel enthalten für eine Kommunikation (41) mit einer im Verkehrsmittel (30) angeordneten Sende-/Empfangseinheit (20) und bei welcher Kommunikation (41) Daten zur Registrierung der definierten Anwesenheit zur Sende-/Empfangseinheit (20) übermittelt werden;
    **dadurch gekennzeichnet, dass**
    die Sende-/Empfangseinheit (20) Mittel zur Registrierung des relativen Orts ($\varphi$, $\varphi$1, $\varphi$2; d, d1, d2, d3, d4; dT1, dT2; dTH) des e-Tickets (10) bezüglich des Verkehrsmittels (30) in der der Sende-/Empfangseinheit (20) aufweist, wobei diese Mittel für eine Radiokommunikation (40) zwischen den e-Tickets (10) und der Sende-/Empfangseinheit (20) vorgesehen sind.

15. System nach Anspruch 14,
    **dadurch gekennzeichnet, dass**
    der relative Ort des e-Tickets (10) durch eine Messung des Winkels ($\varphi$, $\varphi_1$, $\varphi_2$, $\varphi_3$) zwischen der Sende-/Empfangsrichtung vom e-Ticket (10) und einer Bezugsrichtung (28) oder einer Bezugsebene (28) innerhalb des Verkehrsmittels (30) bestimmt wird wobei für die Messung des Winkels die Sende-/Empfangseinheit (20) eine Mehrzahl von verschieden ausgerichteten Antennen (22) enthält.

**16.** System nach Anspruch 14 oder 15,
**dadurch gekennzeichnet, dass**
die Sende-/Empfangseinheit (20) an einer Grenze (34) zwischen zwei innerhalb des Verkehrsmittels (30) verschiedenen Bereichen (1. Cl., 2. Cl.) installiert ist und dass der Winkel ($\varphi$, $\varphi_1$, $\varphi_2$, $\varphi_3$) zwischen e-Ticket (10) und einer Bezugslinie (34) oder einer Bezugsebene (34) aus Sicht der Sende-/Empfangseinheit (20) für die Zuordnung zu einem der beiden Bereiche (1. Cl., 2. Cl.) herangezogen wird.

**17.** System nach einem der Ansprüche 14 bis 16,
**dadurch gekennzeichnet, dass**
der relative Ort des e-Tickets (10) durch eine Messung des Abstandes (d, $d_1$, $d_2$, $d_3$, $d_4$; $d_{T1}$, $d_{T2}$; $d_{TH}$) zwischen der Sende-/Empfangseinheit (20) und dem e-Ticket (10) bestimmt wird, wobei der Abstand aus der Laufzeit eines zwischen e-Ticket (10) und der Sende-/Empfangseinheit (20) übermittelten Signals (40) oder über aus dem Pegel des von der Sende-/Empfangseinheit (20) empfangenen Signals (40) erfolgt und die Sende-/Empfangseinheit (20) dazu die in Fig. 13 bzw. 14 dargestellte Anordnung bzw. einen Funkkommunikationsbaustein aufweist, der Werte für die Empfangspegel eingegangener Datenpakete ausgibt.

**18.** System nach Anspruch 17,
**dadurch gekennzeichnet, dass**
wenigstens ein im Verkehrsmittel (30) fest angeordneter Hilfstransponder (11) vorgesehen ist, so dass die Registrierung des relativen Orts ($d_{T1}$, $d_{T2}$; $d_{TH}$; $d_{H1}$, $d_{H2}$) des e-Tickets (10) bezüglich des Verkehrsmittels (30) über den im Verkehrsmittel (30) bekannten Ort ($d_{H1}$, $d_{H2}$) des Hilfstransponders (11) vorgenommen wird.

**19.** System nach Anspruch 18,
**dadurch gekennzeichnet, dass**
der Hilfstransponder (11) drahtgebunden mit einer Sende-/Empfangseinheit (20) verbunden ist.

**20.** System nach Anspruch 17
**dadurch gekennzeichnet, dass**

- wenigstens ein im Verkehrsmittel (30) fest angeordneter Hilfstransponder (11) vorgesehen ist und dass dessen relativer Ort ($d_{H1}$, $d_{H2}$) im Verkehrsmittel in der Sende-/Empfangseinheit (20) mit Daten ($d_{H1}$, $d_{H2}$) gespeichert ist,
- mit einer weiteren Radiokommunikation (40) zwischen dem Hilfstransponder (11) und der Sende-/Empfangseinheit (20) eine Registrierung des relativen Orts ($d_{H1'}$, $d_{H2'}$) des Hilfstransponders (10) bezüglich des Verkehrsmittels (30) vorgenommen und mit den in der Sende-/Empfangseinheit (20) gespeicherten Daten ($d_{H1}$, $d_{H2}$) verglichen wird und als eine Abweichung registriert wird, und dass
- die Registrierung des relativen Orts (d) des e-Tickets (10) bezüglich des Verkehrsmittels (30) mit der vorgenannten Abweichung kompensiert wird.

**21.** System nach einem der Ansprüche 14 bis 20
**dadurch gekennzeichnet, dass**
die Daten des relativen Ortes ($\varphi$, $\varphi_1$, $\varphi_2$; d, $d_1$, $d_2$, $d_3$, $d_4$) eines e-Tickets (10) einem in der Sende-/Empfangseinheit (20) implementierten unscharfen Auswerteverfahren - vorzugsweise Fuzzy-Algorithmen - unterzogen werden um eine genauere Bestimmung des relativen Ortes des e-Tickets (10) herbeizuführen.

**22.** System nach einem der Ansprüche 14 bis 20
**dadurch gekennzeichnet, dass**
die Daten des relativen Ortes ($\varphi$, $\varphi_1$, $\varphi_2$; d, $d_1$, $d_2$, $d_3$, $d_4$) eines e-Tickets (10) mehrfach ermittelt werden und mittels einem in der Sende-/Empfangseinheit (20) implementierten neuronalen Netzes eine Bestimmung des relativen Ortes des e-Tickets (10) mit Angabe einer bestimmten Wahrscheinlichkeit herbeizuführen.

**Claims**

**1.** Method for registration of a defined presence of an e-ticket (10) in a transportation vehicle (30), wherein said e-tickets (10) comprise transmission and reception means for the communication (41) with a transmission/reception unit (20), arranged in the transportation vehicle and wherein in said communication (41) data for recording the defined presence are transmitted to the transmission/reception unit (20);
**characterized in that**

a registration of the relative location ($\varphi$, $\varphi_1$, $\varphi_2$; d, $d_1$, $d_2$, $d_3$, $d_4$; $d_{T1}$, $d_{T2}$; $d_{TH}$) of the e-ticket with respect to the transportation vehicle (30) in the transmission/reception unit (20) is being conducted by radio communication (40) between an e-ticket (10) and the transmission/reception unit (20).

2. Method according to claim 1,
   **characterized in that**
   the relative location of the e-ticket (10) is determined by measuring the angle ($\varphi$, $\varphi_1$, $\varphi_2$, $\varphi_3$) between the sending/receiving direction of the e-ticket (10) and a reference direction (28) or a reference plane (28) inside the transportation vehicle (30).

3. Method according to claim 2,
   **characterized in that**
   the reference plane (28) is set vertically or horizontally with respect to the transportation vehicle (30).

4. Method according to one of the claims 1 to 3,
   **characterized in that**
   the transmission/reception unit (20) is installed at a dividing line (34) between two different sections (1. Cl., 2. Cl.) inside the transportation vehicle (30) and that the angle ($\varphi$, $\varphi_1$, $\varphi_2$, $\varphi_3$) between the e-ticket (10) and a reference line (34) or reference plane (34) from the viewpoint of the transmission/reception unit (20) is used for assigning it to one of the two section (1. Cl., 2. Cl,).

5. Method according to one of the claims 1 to 4,
   **characterized in that**
   the relative location of the e-ticket (10) is determined by measuring the distance (d, $d_1$, $d_2$, $d_3$, $d_4$; $d_{T1}$, $d_{T2}$; $d_{TH}$) between the transmission/reception unit (20) and the e-ticket (10).

6. Method according to claim 5,
   **characterized in that**
   the measurement of the distance between the transmission/reception unit (20) and the e-ticket (10) is being effected by means of the transit time of a signal (40), transmitted between the e-ticket (10) and the transmission/reception unit (20) or by means of a level evaluation of the signal (40), that has been received by the transmission/reception unit (20).

7. Method according to claim 5 or 6,
   **characterized in that**
   at least one auxiliary transponder (11), firmly arranged in the transportation vehicle (30), is provided in order that the registration of the relative location ($d_{T1}$, $d_{T2}$; $d_{TH}$; $d_{H1}$, $d_{H2}$) of the e-ticket (10) with respect to the transportation vehicle (30) is performed by the known location ($d_{H1}$, $d_{H2}$) of the auxiliary transponder (11) in the transportation vehicle (30).

8. Method according to claim 7,
   **characterized in that**
   the auxiliary transponder (11) is connected to a transmission/reception unit (20) via a wire.

9. Method according to claim 5 or 6,
   **characterized in that**

   - at least one auxiliary transponder (11), firmly arranged in the transportation vehicle (30), is provided and that its relative location ($d_{H1}$, $d_{H2}$) in the transportation vehicle is stored with data ($d_{H1}$, $d_{H2}$) in the transmission/reception unit (20),
   - a registration of the relative location ($d_{H1}$, $d_{H2}$) of the auxiliary transponder (11) with respect to the transportation vehicle (30)is performed by further radio communication (40) between the auxiliary transponder (11) and the transmission/reception unit (20) and compared to the data ($d_{H1}$, $d_{H2}$) stored in the transmission/reception unit (20) and recorded as a variance, and that
   - the registration of the relative location (d) of the e-ticket (10) with respect to the transportation vehicle (30) is compensated with said variance.

10. Method according to one of the claims 1 to 9,

**characterized in that**
the relative location ($\varphi$, $\varphi_1$, $\varphi_2$; d, $d_1$, $d_2$, $d_3$, $d_4$; $d_{T1}$, $d_{T2}$; $d_{TH}$) of the e-ticket with respect to the transportation vehicle (30) is determined with several transmission/(reception units (20, $20_1$, $20_2$).

11. Method according to one of the claims 1 to 10,
**characterized in that**
the communication (41) to record the defined presence of the e-ticket (10) is used for the radio communication (40) in order that no additional frequency is needed for the registration of the relative location ($\varphi$, $\varphi_1$, $\varphi_2$; d, $d_1$, $d_2$, $d_3$, $d_4$; $d_{T1}$, $d_{T2}$; $d_{TH}$) of the e-ticket (10).

12. Method according to one of the claims 1 to 11,
**characterized in that**
the data of the relative location ($\varphi$, $\varphi_1$, $\varphi_2$; d, $d_1$, $d_2$, $d_3$, $d_4$; $d_{T1}$, $d_{T2}$; $d_{TH}$) of an e-ticket (10) undergo a fuzzy evaluation process, preferably fuzzy-algorithms, in order to induce a more precise identification of the relative location of the e-ticket (10).

13. Method according to one of the claims 1 to 11,
**characterized in that**
the data of the relative location ($\varphi$, $\varphi_1$, $\varphi_2$; d, $d_1$, $d_2$, $d_3$, $d_4$; $d_{T1}$, $d_{T2}$; $d_{TH}$) of an e-ticket (10) are multiply calculated in order to induce an identification of the relative location of the e-ticket with a certain probability by means of a neural network.

14. System for registration of a defined presence of an e-ticket (10) in a transportation vehicle (30); wherein said e-tickets (10) comprise transmission and reception devices for the communication (41) with a transmission/reception unit (20), arranged in the transportation vehicle and wherein in said communication (41) data for recording the defined presence are transmitted to the transmission/reception unit (20);
**characterized in that**
the transmission/reception unit (20) features means for the registration of the relative location ($\varphi$, $\varphi_1$, $\varphi_2$; d, $d_1$, $d_2$, $d_3$, $d_4$; $d_{T1}$, $d_{T2}$; $d_{TH}$) of the e-ticket with respect to the transportation vehicle (30) in the transmission/reception unit (20), said means being provided for radio communication (40) between the e-tickets (10) and the transmission/reception unit (20).

15. System according to claim 14,
**characterized in that**
the relative location of the e-ticket (10) is determined by measuring the angle ($\varphi$, $\varphi_1$, $\varphi_2$, $\varphi_3$) between the sending/receiving direction of the e-ticket (10) and a reference direction (28) or a reference plane (28) inside the transportation vehicle (30), wherein the transmission/reception unit (20) comprises a plurality of differently oriented antennas (22) for the measurement of the angle.

16. System according to one of the claims 14 or 15,
**characterized in that**
the transmission/reception unit (20) is installed at a dividing line (34) between two different sections (1. Cl., 2. Cl.) inside the transportation vehicle (30) and that the angle ($\varphi$, $\varphi_1$, $\varphi_2$, $\varphi_3$) between the e-ticket (10) and a reference line (34) or reference plane (34) from the viewpoint of the transmission/reception unit (20) is used for assigning it to one of the two section (1. Cl., 2. Cl,).

17. System according to one of the claims 14 to 16,
**characterized in that**
the relative location of the e-ticket (10) is determined by measuring the distance (d, $d_1$, $d_2$, $d_3$, $d_4$; $d_{T1}$, $d_{T2}$; $d_{TH}$) between the transmission/reception unit (20) and the e-ticket (10), said distance being effected by means of the transit time of a signal (40), transmitted between the e-ticket (10) and the transmission/reception unit (20), or by means of a level evaluation of the signal (40), that has been received by the transmission/reception unit (20), and said transmission/reception unit featuring for this purpose the arrangement depicted in Fig. 13 resp. Fig. 14, respectively a radio communication device, which dispenses values for the receive level of received data packets.

18. System according to claim 17,
**characterized in that**
at least one auxiliary transponder (11), firmly arranged in the transportation vehicle (30), is provided in order that the registration of the relative location ($d_{T1}$, $d_{T2}$; $d_{TH}$; $d_{H1}$, $d_{H2}$) of the e-ticket (10) with respect to the transportation vehicle (30) is undertaken by the known location ($d_{H1}$, $d_{H2}$) of the auxiliary transponder (11) in the transportation vehicle (30).

**19.** System according to claim 18,
**characterized in that**
the auxiliary transponder (11) is connected to a transmission/reception unit (20) over a wire.

**20.** System according to claim 17,
**characterized in that**

- at least one auxiliary transponder (11), firmly arranged in the transportation vehicle (30), is provided and that its relative location ($d_{H1}$, $d_{H2}$) in the transportation vehicle is stored with data ($d_{H1}$, $d_{H2}$) in the transmission/reception unit (20),
- a registration of the relative location ($d_{H1}$, $d_{H2}$) of the auxiliary transponder (11) with respect to the transportation vehicle (30)is performed by further radio communication (40) between the auxiliary transponder (11) and the transmission/reception unit (20) and compared to the data ($d_{H1}$, $d_{H2}$) stored in the transmission/reception unit (20) and recorded as a variance, and that
- the registration of the relative location (d) of the e-ticket (10) with respect to the transportation vehicle (30) is compensated with said variance.

**21.** System according to one of the claims 14 to 20,
**characterized in that**
the data of the relative location ($\varphi$, $\varphi_1$, $\varphi_2$; d, $d_1$, $d_2$, $d_3$, $d_4$; $d_{T1}$, $d_{T2}$; $d_{TH}$) of an e-ticket (10) undergo a fuzzy evaluation process, preferably fuzzy-algorithms, implemented in the transmission/reception unit (20), in order to induce a more precise identification of the relative location of the e-ticket (10).

**22.** System according to one of the claims 14 to 20,
**characterized in that**
the data of the relative location ($\varphi$, $\varphi_1$, $\varphi_2$; d, $d_1$, $d_2$, $d_3$, $d_4$; $d_{T1}$, $d_{T2}$; $d_{TH}$) of an e-ticket (10) are multiply calculated in order to induce an identification of the relative location of the e-ticket with a certain probability by means of a neural network, implemented in the transmission/receiving unit (20).

## Revendications

**1.** Procédé d'enregistrement d'une présence définie de billets électroniques (10) dans un moyen de transport (30), lesquels billets électroniques (10) contiennent des moyens d'émission/réception pour une communication (41) avec une unité d'émission/réception (20) placée dans le moyen de transport (30), communication (41) durant laquelle des données d'enregistrement de la présence définie sont transmises à l'unité d'émission/réception (20) ;
**caractérisé en ce que**
au moyen d'une radiocommunication (40) entre un billet électronique (10) et l'unité d'émission/réception (20), un enregistrement de l'emplacement relatif ($\varphi$, ($\varphi_1$, $\varphi_2$ ; d, $d_1$, $d_2$, $d_3$, $d_4$ ; $d_{T1}$, $d_{T2}$ ; $d_{TH}$) du billet électronique (10) par rapport au moyen de transport (30) est effectué dans l'unité d'émission/réception (20).

**2.** Procédé selon la revendication 1,
**caractérisé en ce que**
l'emplacement relatif du billet électronique (10) est déterminé par une mesure de l'angle ($\varphi$, $\varphi_1$, $\varphi_2$, $\varphi_3$) entre l'unité d'émission/réception du ticket électronique (10) et un sens de référence (28) ou un plan de référence (28) à l'intérieur du moyen de transport (30).

**3.** Procédé selon la revendication 2,
**caractérisé en ce que**
le plan de référence (28) par rapport au moyen de transport (30) est fixé verticalement ou horizontalement.

**4.** Procédé selon l'une des revendications 1 à 3,
**caractérisé en ce que**
l'unité d'émission/réception (20) est installée à une frontière (34) entre deux zones distinctes (1. Cl., 2. Cl.) à l'intérieur du moyen de transport (30), et **en ce qu'**on utilise l'angle ($\varphi$, $\varphi_1$, $\varphi_2$, $\varphi_3$) entre le billet électronique (10) et une ligne de référence (34) ou un plan de référence (34) tel que vu de l'unité d'émission/réception (20) pour l'affectation à l'une des deux zones (1. Cl., 2. Cl.).

5. Procédé selon l'une des revendications 1 à 4,
**caractérisé en ce que**
l'emplacement relatif du billet électronique (10) est déterminé par une mesure de la distance (d, $d_1$, $d_2$, $d_3$, $d_4$ ; $d_{T1}$, $d_{T2}$ ; $d_{TH}$) entre l'unité d'émission/réception (20) et le billet électronique (10).

6. Procédé selon la revendication 5,
**caractérisé en ce que**
la mesure de la distance entre l'unité d'émission/réception (20) et le billet électronique (10) se fait par le biais du temps de parcours d'un signal (40) transmis entre le billet électronique (10) et l'unité d'émission/réception (20) ou par le biais d'une évaluation d'un niveau du signal (40) reçu par l'unité d'émission/réception (20).

7. Procédé selon la revendication 5 ou 6,
**caractérisé en ce que**
il est prévu au moins un transpondeur auxiliaire (11) placé de manière fixe dans le moyen de transport (30), permettant ainsi d'effectuer l'enregistrement de l'emplacement relatif ($d_{T1}$, $d_{T2}$ ; $d_{TH}$ ; $d_{H1}$, $d_{H2}$) du billet électronique (10) par rapport au moyen de transport (30) par le biais de l'emplacement ($d_{H1}$, $d_{H2}$) connu dans le moyen de transport (30) du transpondeur auxiliaire (11).

8. Procédé selon la revendication 7,
**caractérisé en ce que** le transpondeur auxiliaire (11) est relié par fil à une unité d'émission/réception (20).

9. Procédé selon la revendication 5 ou 6,
**caractérisé en ce que**

- il est prévu au moins un transpondeur auxiliaire (11) placé de manière fixe dans le moyen de transport (30), et **en ce que** l'emplacement relatif ($d_H$, $d_{H2}$) de celui-ci dans le moyen de transport est mémorisé avec des données ($d_{H1}$, $d_{H2}$) dans l'unité d'émission/réception (20),
- au moyen d'une autre radiocommunication (40) entre le transpondeur auxiliaire (11) et l'unité d'émission/réception (20), un enregistrement de l'emplacement relatif ($d_{H1}$, $d_{H2}$,) du transpondeur auxiliaire (10) par rapport au moyen de transport (30) est effectué et comparé aux données ($d_{H1}$, $d_{H2}$) mémorisées dans l'unité d'émission/réception (20), et est enregistré en tant qu'écart, et **en ce que**
- l'enregistrement de l'emplacement relatif (d) du billet électronique (10) par rapport au moyen de transport (30) est compensé par ledit écart.

10. Procédé selon l'une des revendications 1 à 9,
**caractérisé en ce que**
l'emplacement relatif ($\varphi$, $\varphi_1$, $\varphi_2$ ; d, $d_1$, $d_2$, $d_3$, $d_4$ ; $d_{T1}$, $d_{T2}$ ; $d_{TH}$) du billet électronique (10) par rapport au moyen de transport (30) est déterminé par plusieurs unités d'émission/réception (20 ; $20_1$, $20_2$).

11. Procédé selon l'une des revendications 1 à 10,
**caractérisé en ce que**
on utilise pour la radiocommunication (40) la communication (41) destiné à l'enregistrement de la présence définie du billet électronique (10), de sorte qu'aucune fréquence supplémentaire n'est nécessaire pour l'enregistrement de l'emplacement relatif ($\varphi$, $\varphi_1$, $\varphi_2$ ; d, $d_1$, $d_2$, $d_3$, $d_4$ ; $d_{T1}$, $d_{T2}$ ; $d_{TH}$) du billet électronique (10).

12. Procédé selon l'une des revendications 1 à 11,
**caractérisé en ce que**
les données de l'emplacement relatif ($\varphi$, $\varphi_1$, $\varphi_2$ ; d, $d_1$, $d_2$, $d_3$, $d_4$) d'un billet électronique (10) sont soumises à un procédé d'évaluation floue - de préférence des algorithmes flous - pour assurer une détermination plus précise de l'emplacement relatif du billet électronique (10).

13. Procédé selon l'une des revendications 1 à 11,
**caractérisé en ce que**
les données de l'emplacement relatif ($\varphi$, $\varphi_1$, $\varphi_2$ ; d, $d_1$, $d_2$, $d_3$, $d_4$) d'un billet électronique (10) sont déterminées à plusieurs reprises pour assurer au moyen d'un réseau neuronal une détermination de l'emplacement relatif du billet électronique (10) avec mention d'une probabilité définie.

**14.** Système d'enregistrement d'une présence définie de billets électroniques (10) dans un moyen de transport (30), lesquels billets électroniques (10) contiennent un moyen d'émission/réception pour une communication (41) avec une unité d'émission/réception (20) placée dans le moyen de transport (30), communication (41) durant laquelle des données d'enregistrement de la présence définie sont transmises à l'unité d'émission/réception (20) ;
**caractérisé en ce que**
l'unité d'émission/réception (20) comporte des moyens d'enregistrement de l'emplacement relatif ($\varphi$, $\varphi_1$, $\varphi_2$ ; d, $d_1$, $d_2$, $d_3$, $d_4$ ; $d_{T1}$, $d_{T2}$ ; $d_{TH}$) du billet électronique (10) par rapport au moyen de transport (30) dans l'unité d'émission/réception (20), ces moyens étant prévus pour une radiocommunication (40) entre les billets électroniques (10) et l'unité d'émission/réception (20).

**15.** Système selon la revendication 14,
**caractérisé en ce que**
l'emplacement relatif du billet électronique (10) est déterminé par une mesure de l'angle ($\varphi$, $\varphi_1$, $\varphi_2$, $\varphi_3$) entre l'unité d'émission/réception du ticket électronique (10) et un sens de référence (28) ou un plan de référence (28) à l'intérieur du moyen de transport (30), l'unité d'émission/réception (20) comprenant une pluralité d'antennes (22), orientées de manière différente, pour la mesure de l'angle.

**16.** Système selon la revendication 14 ou 15,
**caractérisé en ce que**
l'unité d'émission/réception (20) est installée à une frontière (34) entre deux zones distinctes (1. Cl., 2. Cl.) à l'intérieur du moyen de transport (30), et **en ce qu'**on utilise l'angle ($\varphi$, $\varphi_1$, $\varphi_2$, $\varphi_3$) entre le billet électronique (10) et une ligne de référence (34) ou un plan de référence (34) tel que vu de l'unité d'émission/réception (20) pour l'affectation à l'une des deux zones (1. Cl., 2. Cl.).

**17.** Procédé selon l'une des revendications 14 à 16,
**caractérisé en ce que**
l'emplacement relatif du billet électronique (10) est déterminé par une mesure de la distance (d, $d_1$, $d_2$, $d_3$, $d_4$ ; $d_{T1}$, $d_{T2}$ ; $d_{TH}$) entre l'unité d'émission/réception (20) et le billet électronique (10), ladite distance étant déterminée à partir du temps de parcours d'un signal (40) transmis entre le billet électronique (10) et l'unité d'émission/réception (20) ou à partir du niveau du signal (40) reçu par l'unité d'émission/réception (20), et l'unité d'émission/réception (20) ayant pour cela la configuration telle que représentée en Fig. 13 et 14 ou comportant un module de radiocommunication qui fournit des valeurs des niveaux de réception de paquets de données reçus.

**18.** Système selon la revendication 17,
**caractérisé en ce que**
il est prévu au moins un transpondeur auxiliaire (11) placé de manière fixe dans le moyen de transport (30), permettant ainsi d'effectuer l'enregistrement de l'emplacement relatif ($d_{T1}$, $d_{T2}$ ; $d_{TH}$ ; $d_{H1}$, $d_{H2}$) du billet électronique (10) par rapport au moyen de transport (30) par le biais de l'emplacement ($d_{H1}$, $d_{H2}$) connu dans le moyen de transport (30) du transpondeur auxiliaire (11).

**19.** Système selon la revendication 18,
**caractérisé en ce que**
le transpondeur auxiliaire (11) est relié par fil à une l'unité d'émission/réception (20).

**20.** Système selon la revendication 17,
**caractérisé en ce que**

- il est prévu au moins un transpondeur auxiliaire (11) placé de manière fixe dans le moyen de transport (30), et **en ce que** l'emplacement relatif ($d_{H1}$, $d_{H2}$) de celui-ci dans le moyen de transport est mémorisé avec des données ($d_{H1}$, $d_{H2}$) dans l'unité d'émission/réception (20),
- au moyen d'une autre radiocommunication (40) entre le transpondeur auxiliaire (11) et l'unité d'émission/réception (20), un enregistrement de l'emplacement relatif ($d_{H1'}$, $d_{H2'}$) du transpondeur auxiliaire (10) par rapport au moyen de transport (30) est effectué et comparé aux données ($d_{H1}$, $d_{H2}$) mémorisées dans l'unité d'émission/réception (20), et est enregistré en tant qu'écart, et **en ce que**
- l'enregistrement de l'emplacement relatif (d) du billet électronique (10) par rapport au moyen de transport (30) est compensé par ledit écart.

21. Système selon l'une des revendications 14 à 20,
    **caractérisé en ce que**
    les données de l'emplacement relatif ($\varphi$, $\varphi_1$, $\varphi_2$ ; d, $d_1$, $d_2$, $d_3$, $d_4$) d'un billet électronique (10) sont soumises à un procédé d'évaluation floue implémenté dans l'unité d'émission/réception (20) - de préférence des algorithmes flous - pour assurer une détermination plus précise de l'emplacement relatif du billet électronique (10).

22. Procédé selon l'une des revendications 14 à 20,
    **caractérisé en ce que**
    les données de l'emplacement relatif ($\varphi$, $\varphi_1$, $\varphi_2$ ; d, $d_1$, $d_2$, $d_3$, $d_4$) d'un billet électronique (10) sont déterminées à plusieurs reprises pour assurer, au moyen d'un réseau neuronal implémenté dans l'unité d'émission/réception (20), une détermination de l'emplacement relatif du billet électronique (10) avec mention d'une probabilité définie.

FIG 1

**FIG 2**

EP 2 677 457 B1

FIG 3

**FIG 4**

FIG 5

FIG 6

FIG 7

**FIG 8**

FIG 9

**FIG 10**

FIG 11

EP 2 677 457 B1

EP 2 677 457 B1

**FIG 12**

**FIG 13**

FIG 14

EP 2 677 457 B1

**FIG 15**

36

Teilweise ausgewertete Signale aus
Winkel-messung,
Antenne 1

SNR-Werte aus
Winkelmessung,
Antenne 1

Teilweise ausgewertete Signale aus
Winkel-messung,
Antenne 2

SNR-Werte aus
Winkelmessung,
Antenne 2

SNR-Werte aus
Datenkommunikation
über Antenne 1

SNR-Werte aus
Datenkommunikation
über Antenne 2

Anzahl erfasster
e-Tickets im
Wagen

| Klassifizierung | Klassifizierung | Klassifizierung | Klassifizierung | Klassifizierung | Klassifizierung | Klassifizierung |

• • •

Zusätzlich Zwischenspeicherung von **n** vorhergehende Zuständen bei
zyklischer Zuführung der Informationen

• • •

Auswertung durch neuronales Netz

Zugehörigkeit zu einem der folgenden Bereiche:
1. Klasse/2. Klasse/Position nicht ermittelbar (optional)

Wahrscheinlichkeit der Richtigkeit ausgewerteten
Zugehörigkeit: 0 ... 33% / 34 ... 66% / 67 ... 100%

**FIG 16**

EP 2 677 457 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1210693 B1
- US 20060164248 A1
- US 7076998 B2
- US 7924160 B1